# EUROPEAN PATENT APPLICATION

(11) **EP 4 822 860 A1**
(43) Date of publication of application: **14.10.2026**
(21) Application number: 23960613.0
(22) Date of filing: 08.12.2023
(51) Int. Cl.: H01M 50/325

(54) **BATTERY CELL, BATTERY, AND ELECTRIC DEVICE**

(71) Applicant: Contemporary Amperex Technology Co., Limited, Ningde, Fujian 352100 (CN)
(72) Inventor: WU, Kai, Ningde, Fujian 352100 (CN); XING, Chengyou, Ningde, Fujian 352100 (CN); LUO, Chenxu, Ningde, Fujian 352100 (CN); LI, Quankun, Ningde, Fujian 352100 (CN); XU, Xiaofu, Ningde, Fujian 352100 (CN); WANG, Peng, Ningde, Fujian 352100 (CN); JIN, Haizu, Ningde, Fujian 352100 (CN)
(74) Representative: Ziebig Hengelhaupt Intellectual Property Attorneys Patentanwaltskanzlei PartGmbB
(86) International application number: PCT/CN2023/137675
(87) International publication number: WO 2025/118302

(57) **Abstract**

The present application discloses a battery cell, a battery, and an electric device. The battery cell comprises a casing and a one-way valve; the casing is provided with a wall portion; the one-way valve comprises a valve body and a valve core; the valve body is arranged on the outer surface of the wall portion, and at least part of the valve body protrudes out of the outer surface of the wall portion; a valve cavity is formed inside the valve body, and the valve core is arranged in the valve cavity; and the valve core is used for plugging a gas inlet of the valve cavity, and the valve core is configured to open the gas inlet under the action of gas inside the casing and release the gas inside the battery cell. By means of such an arrangement, the gas inside the casing can be discharged out of the casing in a timely manner, so that the gas pressure inside the casing is not excessively high, thereby reducing the risk that a pressure relief mechanism opens the valve in advance, and greatly prolonging the service life of the battery cell.

## Description

### TECHNICAL FIELD

This application relates to the field of new energy technologies, in particular to a battery cell, a battery, and an electric device.

### BACKGROUND

As global energy and environmental issues continue to intensify, new energy, as one of the fields of sustainable development, is developing rapidly. Batteries, as a new energy application method, are used more and more widely, and high requirements are imposed on the use reliability and service life thereof. During charging and discharging of a battery, the generation of gas inside the battery causes an internal pressure of the battery to increase. To ensure the safety of the battery cell, a pressure relief mechanism is generally arranged on a housing of the battery cell to relieve the internal pressure of the battery cell, so that when the internal pressure or temperature of the battery cell reaches a threshold, the pressure relief mechanism can actuate and relieve the internal pressure of the battery cell. However, the pressure relief mechanism of existing battery cells may prematurely actuate to relieve pressure during use, resulting in poor use stability of the battery cell, which is not conducive to extending the service life and improving the use reliability of the battery cell. The above statements are only used to provide background information related to this application and do not necessarily constitute the prior art.

### SUMMARY

The main technical problem to be solved by this application is to provide a battery cell, a battery, and an electric device, to timely discharge gas inside a housing of the battery to the outside of the housing, so that the air pressure inside the housing of the battery is not too high, reducing the risk of a valve of a pressure relief mechanism being opened prematurely, and greatly extending the service life of the battery.

To solve the above technical problem, this application adopts a technical solution as follows. A battery cell is provided, where the battery cell includes a housing and a one-way valve. The housing has a wall portion, where the wall portion has a first exhaust hole, and the first exhaust hole enables communication between the inside of the housing and the outside of the housing. The one-way valve includes a valve body and a valve core. The valve body has a valve cavity inside. The valve body is provided with an air inlet and an air outlet, where the air inlet enables communication between the valve cavity and the inside of the housing, and the air outlet enables communication between the valve cavity and the outside of the housing. The valve core is arranged in the valve cavity. The valve core is used to seal the air inlet, and the valve core is configured to open the air inlet under the action of gas inside the housing and release gas inside the battery cell. The wall portion has an outer surface and an inner surface arranged back to back, where the outer surface faces the outside of the housing, and the inner surface faces the inside of the housing. The valve body is arranged on the outer surface, and at least part of the valve body protrudes from the outer surface. Through such arrangement, the gas inside the housing of the battery can be discharged to the outside of the housing in time, so that the air pressure inside the housing of the battery is not too high.

In an embodiment, the valve body includes a valve seat and a valve cover. The valve cover includes a cover top wall and a cover side wall connected to the cover top wall. The cover top wall, the cover side wall, and the valve seat enclose the valve cavity. The valve seat is provided with an air inlet of the valve cavity, and the valve cover is provided with an air outlet of the valve cavity. Such manner facilitates discharge of gas.

In an embodiment, the valve seat has a first through hole extending through the valve seat, and the air inlet is the first through hole. Such manner facilitates discharge of gas.

In an embodiment, the cover side wall has a second through hole extending through the cover side wall, and the air outlet is the second through hole. Such manner facilitates discharge of gas.

In an embodiment, along a direction facing away from the cover top wall, the second through hole extends to an end portion of the cover side wall. Such manner facilitates discharge of gas.

In an embodiment, there are a plurality of second through holes, and the plurality of second through holes are spaced apart in a circumferential direction of a side wall. Such manner facilitates discharge of gas.

In an embodiment, a first guide post protrudes from a side of the cover top wall facing the valve seat. The cover top wall has a third through hole extending through the cover top wall and the first guide post, or the cover top wall has a third through hole extending through the cover top wall. The air outlet is the third through hole. Such manner facilitates discharge of gas.

In an embodiment, the valve cover further includes a flanged wall, the cover side wall connects the cover top wall and the flanged wall, the flanged wall extends relative to the cover side wall toward a side away from the valve cavity, and the flanged wall is connected to the valve seat. Such manner facilitates assembly of the one-way valve.

In an embodiment, a side of the valve seat facing the valve cover is provided with a first sinking groove recessed relative to a surface of the valve seat, and at least part of the flanged wall is accommodated in the first sinking groove and connected to the valve seat. Such manner can reduce an installation height of the one-way valve.

In an embodiment, the side of the valve seat facing the valve cover is provided with a first step surface and a second step surface, where the first step surface is closer to the valve cover than the second step surface, and the first sinking groove is provided on the first step surface. Such manner can improve the assembly stability.

In an embodiment, a surface of the flanged wall facing the cover top wall is flush with a surface of the valve seat facing the valve cover; or the surface of the flanged wall facing the cover top wall is lower than the surface of the valve seat facing the valve cover. Such manner can enhance the connection strength as well as reduce the installation height of the one-way valve.

In an embodiment, the flanged wall is welded to the valve seat, where in a circumferential direction of the cover side wall, at least part of a first weld mark between the flanged wall and the valve seat is staggered from the second through hole in the cover side wall. Such manner can reduce damage to the valve core component caused by a high temperature in a welding process.

In an embodiment, a connecting protrusion protrudes from an outer circumferential surface of the valve seat, an inner circumferential surface of the flanged wall is provided with an accommodating groove, and the connecting protrusion is accommodated in the accommodating groove and connected to the flanged wall. Such manner can enhance the connection strength as well as reduce the installation height of the one-way valve.

In an embodiment, the connecting protrusion is welded to the flanged wall, where the flanged wall has an upper surface and a lower surface arranged back to back, the upper surface faces the cover top wall, and a second weld mark formed by welding of the connecting protrusion and the flanged wall is located on the lower surface of the flanged wall. Such manner can reduce damage to the valve core component caused by a high temperature in a welding process.

In an embodiment, the valve body includes a valve cover, where the valve cover includes a cover top wall and a cover side wall connected to the cover top wall. The cover top wall, the cover side wall, and the wall portion enclose a valve cavity. The wall portion is provided with an air inlet of the valve cavity, and the cover side wall is provided with an air outlet of the valve cavity. Such manner facilitates discharge of gas.

In an embodiment, a side of the wall portion facing the outside of the housing is provided with a second sinking groove recessed relative to an outer surface of the wall portion, the valve cover further includes a flanged wall, the cover side wall connects the cover top wall and the flanged wall, the flanged wall extends relative to the cover side wall toward a side away from the valve cavity, and at least part of the flanged wall is accommodated in the second sinking groove and connected to the wall portion. Such manner can reduce the installation height of the one-way valve.

In an embodiment, the valve core includes an elastic member and a blocking member. The elastic member is arranged in the valve cavity. The blocking member is movably arranged in the valve cavity. The blocking member is used to seal an air inlet channel under the action of the elastic member, and is also used to open the air inlet channel under the action of the gas inside the housing. Such manner can facilitate the discharge of gas.

In an embodiment, the valve body includes a valve cover and a valve seat, the valve cover and the valve seat enclose a valve cavity, a first guide post protrudes from a side of the valve cover facing the blocking member, and part of the elastic member sleeves an outer side of the first guide post. Such manner can implement positioning and guidance for the elastic member.

In an embodiment, a diameter of the first guide post is D1, and an inner diameter of the elastic member is D2, satisfying 0 mm < D2 - D1 ≤ 5 mm. Such manner can facilitate the assembly of the elastic member and the first guide post.

In an embodiment, a second guide post protrudes from a side of the blocking member facing the valve cover, and part of the elastic member sleeves an outer side of the second guide post. Such manner can implement positioning and guidance for the elastic member.

In an embodiment, a diameter of the second guide post is D3, and the inner diameter of the elastic member is D2, satisfying 0 mm < D3 - D1 ≤ 5 mm. Such manner can facilitate the assembly of the elastic member and the second guide post.

In an embodiment, in an axial direction of the elastic member, there is a spacing between an end surface of a side of the first guide post away from the valve cover and an end surface of a side of the second guide post close to the valve cover; and a height H1 of the spacing satisfies 0 mm < H1 ≤ 0.5 mm. Such manner can increase the space utilization rate.

In an embodiment, in an axial direction of the valve cavity, two ends of the elastic member respectively abut against the valve cover and the blocking member, a distance between a first abutting surface of the valve cover and a second abutting surface of the blocking member is L1, and an entity length of the elastic member is L2, satisfying L1 > L2, where the entity length of the elastic member is a length occupied by an entity of the elastic member after the elastic member is completely compressed; and optionally, L1 - L2 > 0.5 mm. Such manner can provide a compression space for the elastic member to drive the blocking member to seal/open the air inlet channel.

In an embodiment, the elastic member is a spring, and the entity length L2 of the elastic member is equal to d1*n1 + d2 + d3, where d1 is a wire diameter of the spring, n1 is a maximum number of turns of the spring in an axial direction, d2 is a thickness of an outermost portion of one end of the spring, d3 is a thickness of an outermost portion of the other end of the spring, d2 ≤ d1, and d3 ≤ d1.

In an embodiment, a plurality of limiting protrusions protrude from an outer circumferential surface of the blocking member, and the plurality of limiting protrusions are spaced apart along a circumferential direction of the blocking member. Such manner can achieve guidance and positioning for the blocking member to improve the stability of movement of the blocking member.

In an embodiment, the blocking member includes a pressing portion and a sealing portion; along a thickness direction of the wall portion, the two ends of the elastic member respectively abut against the valve cover and the pressing portion; the sealing portion is connected to a side of the pressing portion facing away from the valve cover; and the sealing portion is used to seal the air inlet channel. Such manner helps to maintain the airtightness of the housing.

In an embodiment, a material of the sealing portion includes ethylene propylene diene monomer, fluororubber, or Teflon.

In an embodiment, a material of the elastic member includes steel, iron, or aluminum.

In an embodiment, the valve cover includes a cover side wall, the cover side wall has a second through hole extending through the cover side wall, the air outlet is the second through hole, and along the axial direction of the valve cavity, a sealing interface between the valve core and the valve seat is higher than or flush with a bottom wall of the second through hole. Such manner can facilitate the discharge of gas.

In an embodiment, the wall portion is provided with a first exhaust hole, and at least part of the one-way valve is accommodated in the first exhaust hole.

In an embodiment, the first exhaust hole includes a through hole section and a first hole section, the through hole section and the first hole section are arranged along the thickness direction of the wall portion, the through hole section enables communication between the inside of the housing and the outside of the housing, the first hole section is located on a side of the through hole section facing away from the inside of the housing, an aperture of the first hole section is greater than an aperture of the through hole section, at least part of the one-way valve is accommodated in the first hole section, the valve body of the one-way valve faces the outside of the housing, and at least part of the valve body protrudes from the outer surface of the wall portion. Such manner can facilitate the assembly of the one-way valve.

In an embodiment, the first hole section includes a circumferentially arranged hole side surface, and an outer circumferential surface of the valve cover/valve seat of the one-way valve is welded to the hole side surface. This can enhance the connection strength.

In an embodiment, the side of the valve seat facing the valve cover is provided with a first step surface and a second step surface, where the first step surface is closer to the valve cover than the second step surface, and an outer circumferential surface of the second step is welded to the hole side surface. Such manner can improve the assembly stability.

In an embodiment, the hole side surface fits with the outer circumferential surface of the valve cover/valve seat of the one-way valve, and both the hole side wall surface and the outer circumferential surface of the valve cover/valve seat of the one-way valve are arranged at an acute angle with a central axis of the first exhaust hole. This can enhance the connection strength.

In an embodiment, a stress relief groove is provided around a weld mark between the valve cover/valve seat and the wall portion; optionally, a first stress relief groove is provided on a side surface of the valve seat/valve cover facing the outside of the housing; and/or a second stress relief groove is provided on a side surface of the wall portion facing the outside of the housing. Such manner can improve the connection stability.

In an embodiment, the valve body is provided with a weak-strength zone. Through such arrangement, when the internal pressure of the battery cell is too high, the valve body is fractured at the weak-strength zone to achieve the effect of quickly discharging the gas inside the battery cell to the outside.

In an embodiment, the weak-strength zone includes a small-thickness zone. Such arrangement facilitates simplification of a preparation process.

In an embodiment, the valve body includes a valve cover, where the valve cover includes a cover top wall and a cover side wall connected to the cover top wall, and the small-thickness zone includes a groove provided on the cover side wall. Such arrangement can reduce damage to the housing of the battery caused by the fracture of the valve body.

In an embodiment, the cover side wall has second through holes extending through the cover side wall, and the groove is provided on a connecting arm between adjacent two of the second through holes. Such arrangement facilitates simplification of a preparation process.

In an embodiment, the groove is located on a side of the cover side wall facing the valve cavity; or the groove is located on a side of the cover side wall away from the valve cavity. Such arrangement facilitates simplification of a preparation process.

In an embodiment, the small-thickness zone includes a first score groove, where the first score groove is a circumferential groove on the cover side wall. Through such arrangement, when the internal pressure of the battery cell is too high, the fracture of the valve body can be accelerated to achieve the effect of quickly discharging the gas inside the battery cell to the outside.

In an embodiment, the small-thickness zone includes a plurality of second score grooves, and the plurality of second score grooves are spaced apart in the circumferential direction of the cover side wall. Such arrangement facilitates simplification of a preparation process.

In an embodiment, the battery cell further includes an insulating member, the insulating member is arranged on a side of the wall portion facing the inside of the housing, the insulating member is provided with a second exhaust hole extending through the insulating member, and the second exhaust hole is in communication with the first exhaust hole on the wall portion. Such manner can facilitate the discharge of gas.

In an embodiment, the wall portion is provided with a first exhaust hole, at least part of the one-way valve is installed in the first exhaust hole, and the first exhaust hole is an electrolyte injection hole of the battery cell, or the first exhaust hole is spaced from the electrolyte injection hole. In this way, using the one-way valve to replace an original sealing structure for the electrolyte injection hole can facilitate structure simplification of the battery cell.

In an embodiment, the housing includes a shell and an end cover, an accommodating cavity having an opening is formed inside the shell, the accommodating cavity is used to accommodate an electrode assembly, and the end cover closes the opening; where the end cover is the wall portion; or the shell includes the wall portion; or the wall portion is a wall located at a top of the housing when the battery cell is in a placed state. Such manner can facilitate the discharge of gas.

In an embodiment, the battery cell further includes a pressure relief mechanism, the pressure relief mechanism is arranged on the housing, the pressure relief mechanism is configured to actuate and relieve the internal pressure of the battery cell upon thermal runaway of the battery cell, and an actuation pressure of the pressure relief mechanism is greater than an opening pressure of the one-way valve. Such manner can improve the safety of the battery.

In an embodiment, the wall portion has a pressure relief hole, the pressure relief hole enables communication between the inside of the housing and the outside of the housing, the pressure relief hole is in communication with the pressure relief mechanism, and an aperture of the pressure relief hole is greater than an aperture of the first exhaust hole. Such manner increases the pressure relief capacity of the battery cell.

In an embodiment, an exhaust rate of the one-way valve is less than an exhaust rate of the pressure relief mechanism. Such manner increases the pressure relief capacity of the battery cell.

In an embodiment, the opening pressure of the one-way valve is greater than or equal to 0.2 MPa, optionally greater than or equal to 0.4 MPa. This facilitates regulation of the internal pressure of the battery cell.

In an embodiment, the valve body is provided with a weak-strength zone, the actuation pressure of the pressure relief mechanism is greater than an actuation pressure of the weak-strength zone, and the actuation pressure of the weak-strength zone is greater than the opening pressure of the one-way valve. Such manner increases the pressure relief capacity of the battery cell.

In an embodiment, an aperture of the air inlet is greater than or equal to the aperture of the first exhaust hole. Such manner increases the pressure relief capacity of the battery cell.

To solve the above technical problem, this application adopts another technical solution as follows. A battery is provided, where the battery includes the above battery cell. The battery has at least the same advantages as the battery cell.

To solve the above technical problem, this application adopts another technical solution as follows. An electric device is provided, which includes the above battery. The electric device has at least the same advantages as the battery.

The above description is only an overview of the technical solutions of this application. To more clearly understand the technical means of this application so that it may be implemented in accordance with the content of the specification, and to make the above and other objectives, features, and advantages of this application more obvious and understandable, specific embodiments of this application are specifically listed below.

### BRIEF DESCRIPTION OF DRAWINGS

To more clearly illustrate the technical solutions in the embodiments of this application, the drawings required for use in the description of the embodiments are briefly introduced below. Obviously, the drawings in the following description are only some embodiments of this application. For those of ordinary skill in the art, other drawings may alternatively be obtained based on these drawings without creative efforts.
FIG. 1 is a schematic diagram of an exploded structure of a battery cell according to one or more embodiments;
FIG. 2 is a schematic diagram of a cross-sectional structure of a one-way valve according to one or more embodiments;
FIG. 3a is a schematic structural diagram of a blocking member of a one-way valve according to one or more embodiments;
FIG. 3b is a schematic diagram of a cross-sectional structure of a one-way valve according to one or more embodiments;
FIG. 3c is a schematic diagram of a state of an elastic member according to one or more embodiments;
FIG. 4 is a schematic diagram of an exploded structure of a one-way valve according to one or more embodiments;
FIG. 5 is a front view of a one-way valve according to one or more embodiments;
FIG. 6 is a schematic diagram of a partial cross-sectional structure of a battery cell according to one or more embodiments;
FIG. 7 is a schematic diagram of a cross-sectional structure of a one-way valve according to one or more embodiments;
FIG. 8 is a front view of a one-way valve according to one or more embodiments;
FIG. 9 is a bottom view of a one-way valve according to one or more embodiments;
FIG. 10 is a schematic diagram of an exploded structure of a one-way valve according to one or more embodiments;
FIG. 11 is a schematic diagram of a partial cross-sectional structure of a battery cell according to one or more embodiments;
FIG. 12 is a schematic diagram of a partial cross-sectional structure of a battery cell according to one or more embodiments;
FIG. 13 is a schematic diagram of a partial cross-sectional structure of an end cover according to one or more embodiments;
FIG. 14 is a front view of an end cover of a battery cell according to one or more embodiments;
FIG. 15 is a schematic diagram of a partial exploded structure of a battery cell according to one or more embodiments;
FIG. 16 is a front view of a one-way valve according to one or more embodiments;
FIG. 17 is a schematic diagram of an exploded structure of a one-way valve according to one or more embodiments;
FIG. 18 is a schematic diagram of a cross-sectional structure of a one-way valve according to one or more embodiments;
FIG. 19 is a schematic diagram of a state of a one-way valve according to one or more embodiments;
FIG. 20 is a front view of an end cover of a battery cell according to one or more embodiments;
FIG. 21 is a schematic diagram of a partial exploded structure of a battery cell according to one or more embodiments;
FIG. 22 is a schematic diagram of an exploded structure of a battery cell according to one or more embodiments;
FIG. 23 is a schematic diagram of an exploded structure of a battery according to one or more embodiments; and
FIG. 24 is a schematic structural diagram of a vehicle according to one or more embodiments.

In the drawings:
1000. vehicle; 300. motor; 200. controller; 100. battery; 10. box; 11. first part; 12. second part; 20. battery cell; 21. end cover; 21a. outer surface; 21b. inner surface; 291. first exhaust hole; 22. shell; 23. electrode assembly; 24. insulating member; 292. second exhaust hole; 25. electrode terminal; 280. through hole section; 281. first hole section; 30. one-way valve; 31. valve body; 311. valve seat; 3111. first through hole; 3112. first sinking groove; 3113. connecting protrusion; 3119. weak-strength zone; 312. valve cover; 3121. cover top wall; 31211. first guide post; 31212. third through hole; 3122. cover side wall; 3122a. entity zone; 3122b. exhaust zone; 31221. second through hole; 31222. flanged wall; 31222a. connecting surface; 31222b. accommodating groove; 31222c. upper surface; 31222d. lower surface; 313. valve cavity; 313a. air inlet; 313b. air outlet; 32. valve core; 321. blocking member; 3211. sealing portion; 3212. pressing portion; 3212a. limiting protrusion; 3212b. second guide post; 322. elastic member; 60. protective patch; 601. first avoidance hole; 602. second avoidance hole; 603. third avoidance hole; 70. pressure relief mechanism; 701. pressure relief hole; W1. first weld mark; W2. second weld mark; and W3. third weld mark.

### DESCRIPTION OF EMBODIMENTS

To make the objectives, technical solutions, and effects of this application clearer and more definite, the embodiments of the technical solutions of this application are described in detail below in conjunction with the drawings. The following embodiments are only used to more clearly illustrate the technical solutions of this application, and therefore are only used as examples and cannot be used to limit the protection scope of this application.

Unless otherwise defined, all technical and scientific terms used herein have the same meaning as those commonly understood by those skilled in the technical field of this application; the terms used herein are only for the purpose of describing specific embodiments and are not intended to limit this application; the terms "include", "comprise", and "have", as well as any variations thereof used in the specification, claims, and the above-mentioned description of drawings are intended to cover non-exclusive inclusion.

In the description of the embodiments of this application, the technical terms "first" and "second" are only used to distinguish different objects, and cannot be understood as indicating or implying relative importance or implicitly indicating the number, specific order, or primary-secondary relationship of the indicated technical features. In the description of the embodiments of this application, the term "a plurality of" means at least two (including two). Similarly, "a plurality of groups" means at least two groups (including two groups), and "a plurality of pieces" means at least two pieces (including two pieces), unless otherwise clearly and specifically limited.

As used herein, reference to "an embodiment" means that a particular feature, structure, or characteristic described in connection with this embodiment can be included in at least one embodiment of this application. The phrase appearing at various places in the specification does not necessarily refer to the same embodiment, nor is it an independent or alternative embodiment that is mutually exclusive with other embodiments. Those of ordinary skill in the art explicitly and implicitly understand that the embodiments described herein can be combined with other embodiments.

The term "and/or" mentioned herein is only a description of an association relationship of associated objects, indicating that there may be three relationships. For example, A and/or B may represent the following three cases: only A exists, both A and B exist, and only B exists. In addition, the character "/" in this article generally indicates that the contextually associated objects are in an "or" relationship.

Quantities, ratios, and other numerical values are presented herein in a range format. It should be understood that such range format is for convenience and brevity and should be flexibly understood, which not only includes the numerical values explicitly specified as range limitations, but also includes all individual numerical values or sub-ranges encompassed within the stated range, as if each numerical value and sub-range are explicitly specified.

In the description of the embodiments of this application, the same reference numerals denote the same components, and for brevity, detailed descriptions of the same components are omitted in different embodiments. It should be understood that the dimensions such as thickness, length, and width of various components in the embodiments of this application shown in the drawings, as well as the dimensions such as overall thickness, length, and width of the integrated apparatus, are only illustrative descriptions and should not constitute any limitation on this application.

In the description of the embodiments of this application, the orientations or positional relationships indicated by the technical terms "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential", and the like are based on the orientations or positional relationships shown in the drawings, are only for the convenience of describing the embodiments of this application and simplifying the description, do not indicate or imply that the apparatus or element referred to must have a specific orientation or be constructed and operated in a specific orientation, and therefore cannot be understood as a limitation on the embodiments of this application.

In the description of the embodiments of this application, unless otherwise clearly specified and limited, the technical terms "mount", "connect", "join", "fasten", and the like should be understood in a broad sense. For example, it may be a fixed connection, a detachable connection, or an integral connection; it may alternatively be a mechanical connection or an electrical connection; it may be a direct connection or an indirect connection through an intermediate medium; and it may be the internal communication of two elements or an interaction relationship between two elements. For those of ordinary skill in the art, the specific meanings of the above terms in the embodiments of this application can be understood according to specific circumstances.

Batteries are widely used in the field of new energy, mainly including electric vehicles, energy storage systems, and renewable energy. In the field of electric vehicles, better performance such as longer battery life and fast charging has been gradually achieved. In terms of energy storage systems, batteries are widely used in large-scale and distributed energy storage, and they can balance grid loads, store renewable energy such as solar energy and wind energy, as well as release the stored energy during peak periods. In addition, small rechargeable batteries are also widely used in wearable devices, drones, smart homes, and the like.

During charging and discharging of a battery, gas is produced due to some side reactions. If the gas produced in the battery is not discharged in time, an internal pressure of the battery increases. An excessive internal pressure causes a negative impact on the performance and appearance of the battery. For example, in severe cases, a destructive impact on the performance and appearance of the battery may be caused, such as electrolyte leakage, bulging, increased battery internal resistance, and shortened discharge time and cycle life. In addition, there are some abnormal operations during use of the battery, including overcharging, over-discharging, internal faults, and the like. In these cases, chemical reactions inside the battery may be out of control and accompanied with intense release of gas, and may even cause thermal runaway of the battery. Thermal runaway of the battery refers to a chain reaction phenomenon triggered by various inducements. A large amount of heat and harmful gases emitted due to thermal runaway cause fire and explosion of the battery.

To improve the safety of a battery cell, a pressure relief mechanism is usually arranged at a housing of the battery cell, so that an internal pressure of the battery cell is relieved through the pressure relief mechanism, thereby effectively improving the safety of the battery cell. However, the instability of the internal pressure during use of the battery cell may cause the pressure relief mechanism of the battery cell to actuate and relieve pressure prematurely, resulting in poor use stability of the battery cell, which is not conducive to extending the service life and improving the use reliability of the battery cell.

Based on the above considerations, an embodiment of this application provides a battery cell. The battery cell is provided with a one-way valve, and the one-way valve can be used to discharge gas inside the battery cell in time to maintain a stable internal pressure of the battery cell.

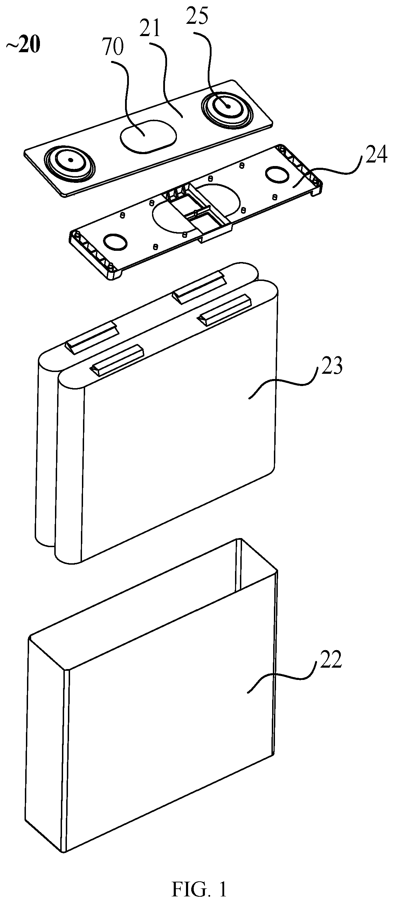

Reference is made to FIG. 1, where FIG. 1 is a schematic diagram of an exploded structure of a battery cell 20 according to one or more embodiments. The battery cell 20 is the smallest unit that constitutes a battery 100. As shown in FIG. 1, the battery cell 20 includes an end cover 21, a shell 22, an electrode assembly 23, and other functional components.

The end cover 21 refers to a component that covers an opening of the shell 22 to isolate the internal environment of the battery cell 20 from the external environment. Without limitation, the end cover 21 may be adapted to the shell 22 in shape so as to fit with the shell 22. Optionally, the end cover 21 may be made of a material with specific hardness and strength (such as aluminum alloy), so that the end cover 21 is less likely to deform when subjected to extrusion and collision, enabling the battery cell 20 to have higher structural strength and improved safety performance. The end cover 21 may be provided with functional components such as electrode terminals 25. The electrode terminals 25 may be used to be electrically connected to the electrode assembly 23 to output or input electrical energy of the battery cell 20. Exemplarily, the battery cell 20 is provided with two electrode terminals 25, and the two electrode terminals 25 are both installed on the end cover 21. The two electrode terminals 25 are respectively used to be electrically connected to two tabs of the electrode assembly 23 that have opposite polarities, to realize the output or input of a positive electrode and a negative electrode of the battery cell 20 respectively. In some embodiments, the end cover 21 may be further provided with a pressure relief mechanism 70 for relieving an internal pressure when the internal pressure or temperature of the battery cell 20 reaches a threshold. The end cover 21 may be made of various materials, such as copper, iron, aluminum, stainless steel, aluminum alloy, and plastic, which are not particularly limited in the embodiments of this application. In some embodiments, an inner side of the end cover 21 may be provided with an insulating member 24, and the insulating member 24 may be used to isolate electrical connection components in the shell 22 from the end cover 21, to reduce the risk of short circuits. Exemplarily, the insulating member 24 may be made of plastic, rubber, or the like.

The shell 22 is a component used to fit with the end cover 21 to form the internal environment of the battery cell 20, where the formed internal environment may be used to accommodate the electrode assembly 23, an electrolyte solution, and other components. The shell 22 and the end cover 21 may be separate components, where the shell 22 may be provided with an opening, and the end cover 21 may be used to cover the opening to form the internal environment of the battery cell 20. Without limitation, the end cover 21 and the shell 22 may alternatively be integrated. Specifically, the end cover 21 and the shell 22 may first form a shared connecting surface 31222a before other components are placed into the shell. When the inside of the shell 22 needs to be sealed, the end cover 21 is used to cover the shell 22. The shell 22 may have various shapes and sizes, such as a cuboidal shape, a cylindrical shape, and a hexagonal prism shape. Specifically, the shape of the shell 22 may be determined according to a specific shape and size of the electrode assembly 23. The shell 22 may be made of various materials, such as copper, iron, aluminum, stainless steel, aluminum alloy, and plastic, which are not particularly limited in the embodiments of this application.

The electrode assembly 23 is a component in the battery cell 20 where electrochemical reactions take place. The shell 22 may include one or more electrode assemblies 23 inside. The electrode assembly 23 is mainly formed by winding or stacking a positive electrode sheet and a negative electrode sheet, and a separator is usually arranged between the positive electrode sheet and the negative electrode sheet. Parts of the positive electrode sheet and the negative electrode sheet that have active materials constitute a main body of the electrode assembly 23, and parts of the positive electrode sheet and the negative electrode sheet that do not have active materials respectively constitute tabs. A positive tab and a negative tab may be together located at one end of the main body or respectively located at two ends of the main body. During charging and discharging of the battery 100, a positive electrode active material and a negative electrode active material react with the electrolyte solution, and the tabs are connected to the electrode terminals 25 to form a current loop.

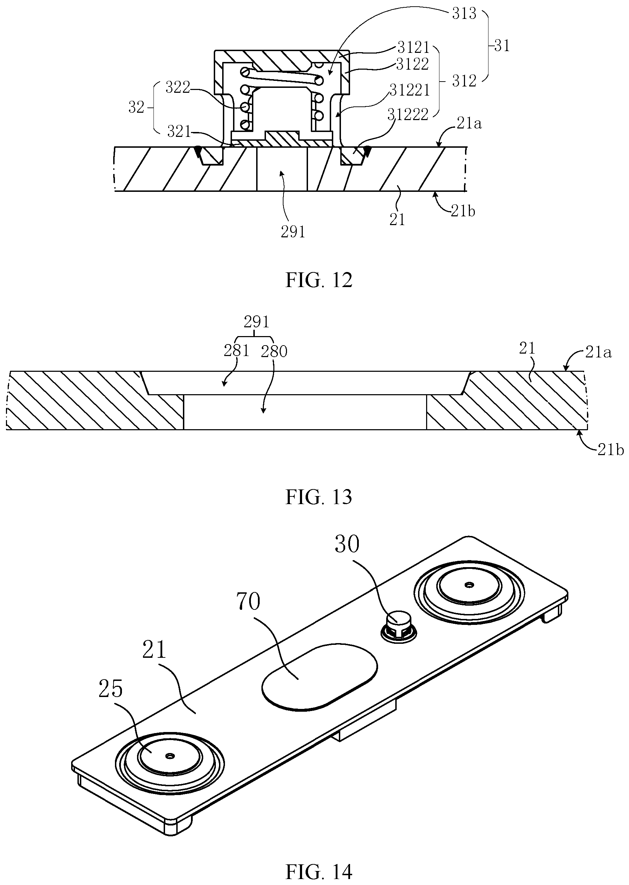

Reference is made to FIG. 14, where FIG. 14 is a schematic diagram of a partial exploded structure of a battery cell 20 according to one or more embodiments. According to some embodiments of this application, this application discloses a battery cell 20. The battery cell 20 includes a housing and a one-way valve 30. The housing has a wall portion. The one-way valve 30 is arranged on the wall portion. The one-way valve 30 is used to discharge gas inside the housing.

In the battery cell 20 with this structure, by arranging the one-way valve 30 on the wall portion of the housing, the one-way valve 30 can discharge the gas inside the housing to the outside of the housing, so that when gas is generated inside the housing during normal use of the battery cell 20, the gas can be discharged to the outside of the housing through the one-way valve 30, so as to alleviate the phenomenon that an internal pressure of the battery cell 20 prematurely reaches a threshold due to an increase in an internal air pressure of the battery cell 20 and thus the battery cell 20 prematurely actuates and relieves pressure, effectively improving the use stability of the battery cell 20, thereby extending the service life and improving the use reliability of the battery cell 20.

According to some embodiments of this application, the housing includes an end cover 21 and a shell 22, and the wall portion may be a wall of the end cover 21 or a wall of the shell 22. To be specific, the one-way valve 30 may be arranged on the end cover 21 or on the shell 22. In other words, the wall portion for installing the one-way valve 30 may be the end cover 21 of the housing or a wall of the shell 22 of the housing. Exemplarily, the wall portion is the end cover 21. Certainly, the structure of the battery cell 20 is not limited thereto. In other embodiments, the wall portion may alternatively be a bottom wall of the shell 22 opposite the end cover 21, and the wall portion may alternatively be a side wall of the shell 22 adjacent to and connected to the end cover 21. The following uses an example in which the wall portion is a wall of the end cover 21 to illustrate the solution of this application, but it does not limit this application.

According to some embodiments of this application, the one-way valve 30 is configured to actuate and release gas inside the battery cell 20 when the internal air pressure of the battery cell 20 reaches a threshold. In other words, the one-way valve 30 is used to discharge the gas inside the housing. To be specific, the one-way valve 30 can be opened unidirectionally for gas exhaust, so that the gas inside the housing can be discharged to the outside of the housing through the one-way valve 30.

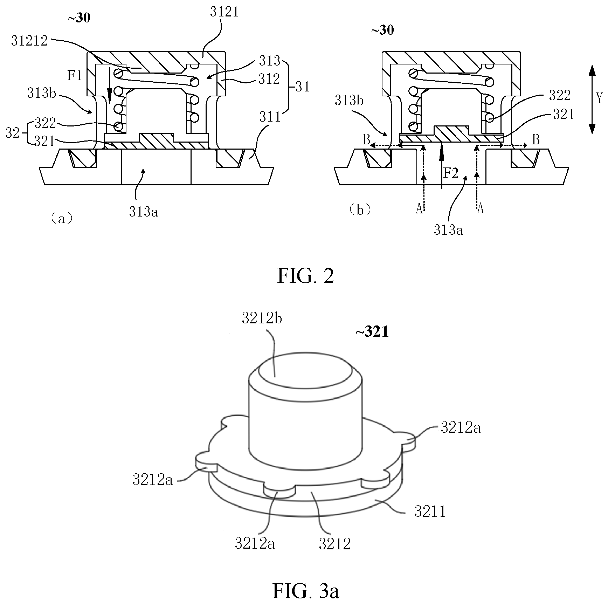

Reference is made to FIG. 2, where FIG. 2 is a schematic diagram of a cross-sectional structure of a one-way valve 30 according to one or more embodiments. According to some embodiments of this application, the one-way valve 30 includes a valve body 31 and a valve core 32. The valve body 31 has a valve cavity 313 inside. The valve body 31 is provided with an air inlet 313a and an air outlet 313b. The air inlet 313a enables communication between the valve cavity 313 and the inside of the housing, and the air outlet 313b enables communication between the valve cavity 313 and the outside of the housing. The valve core 32 is arranged in the valve cavity 313, the valve core 32 is used to seal the air inlet 313a of the valve cavity 313, and the valve core 32 is configured to open the air inlet 313a under the action of the gas inside the housing and release the gas inside the battery cell 20.

The air inlet 313a is used to enable communication between the valve cavity 313 and the inside of the housing. To be specific, the gas inside the housing can enter the valve cavity 313 through the air inlet 313a. The air outlet 313b is used to enable communication between the valve cavity 313 and the outside of the housing. To be specific, the gas in the valve cavity 313 can be discharged to the outside of the housing through the air outlet 313b. Through such arrangement, the gas inside the housing of the battery cell 20 can be discharged to the outside of the housing through the valve cavity 313.

Specifically, when the gas inside the housing of the battery cell 20 is discharged through the one-way valve 30, a discharge path of the gas is as follows: the inside of the battery cell 20-the air inlet 313a-the valve cavity 313-the air outlet 313b-the exterior of the battery cell 20, and the entire exhaust path constitutes an exhaust channel. As shown in a path from A to B in (b) of FIG. 2, A is an inner side of the housing, and B is an outer side of the housing. To be specific, the gas inside the housing of the battery cell 20 enters the valve cavity 313 through the air inlet 313a, flows through the valve cavity 313, and is then discharged to the outside of the housing of the battery 100 through the air outlet 313b of the valve cavity 313.

Further, the valve core 32 is used to seal an air inlet channel of the valve cavity 313 and is used to open the air inlet channel under the action of the gas inside the housing. The air inlet channel is a channel through which the gas inside the housing enters the valve cavity 313 and flows after entering the valve cavity 313. In other words, the air inlet channel may be a part of the exhaust channel, or more specifically, a part of the path before the air outlet 313b of the exhaust channel. The valve core 32 seals the air inlet channel, meaning that gas is not allowed to enter the valve cavity 313, or gas is allowed to enter the valve cavity 313 but is not allowed to flow out of the valve cavity 313. The valve core 32 may directly seal the air inlet 313a and does not allow gas to enter the valve cavity 313; or a flow path of the gas is sealed, that is, the gas can enter the valve cavity 313 through the air inlet 313a, but its flow path is sealed and cannot continue to flow to the air outlet 313b. When the valve core 32 seals the air inlet channel, the gas outside the housing cannot enter the inside of the housing, and the gas inside the housing cannot be discharged to the outside of the housing. When a pressure of the gas inside the housing reaches a specific threshold, the gas inside the housing can push the valve core 32 to open the air inlet channel, so that the gas inside the housing can enter the valve cavity 313 and then be discharged to the outside of the housing through the air outlet 313b. In addition, the valve core 32 is only allowed to be opened unidirectionally by applying a pressure from the inner side of the housing to allow gas to flow out, but cannot be opened reversely from the outer side of the housing.

Optionally, the valve core 32 may be various structures. For example, in FIG. 2, the valve core 32 may include an elastic member 322 and a blocking member 321. Both the elastic member 322 and the blocking member 321 are arranged in the valve cavity 313. The elastic member 322 is configured to provide an elastic force for the blocking member 321. The sealing and opening of the valve cavity 313 are realized by deformation of the elastic member 322. Specifically, the elastic member 322 is arranged in the valve cavity 313, the blocking member 321 is movably arranged in the valve cavity 313, and the blocking member 321 is used to seal the air inlet channel under the action of the elastic member 322, and is also used to open the air inlet 313a under the action of the gas inside the housing.

The blocking member 321 is movably arranged in the valve cavity 313. To be specific, the blocking member 321 can move in the valve cavity 313, so that the blocking member 321 can seal the air inlet 313a while moving close to the air inlet 313a. On the contrary, the blocking member 321 can open the air inlet 313a while moving away from the air inlet 313a.

In some embodiments, the blocking member 321 is in clearance fit with an inner wall of the valve cavity 313.

Exemplarily, the air inlet 313a extends through a bottom surface of the valve cavity 313. Correspondingly, the blocking member 321 is movably arranged in the valve cavity 313 along an axial direction of the valve cavity 313 (a direction Y shown in the figure), so that the blocking member 321 can seal the air inlet 313a when it abuts against the bottom surface of the valve cavity 313. Certainly, in other embodiments, the air inlet 313a may alternatively be arranged on a side of the valve body 31 in a radial direction of the valve body 31. Correspondingly, the blocking member 321 is movably arranged in the valve cavity 313 along the radial direction of the valve body 31.

The blocking member 321 is used to seal the air inlet 313a under the action of the elastic member 322 and is also used to open the air inlet 313a under the action of the gas inside the housing. In other words, the elastic member 322 can provide an elastic force for the blocking member 321, so that the blocking member 321 can abut against the bottom surface of the valve cavity 313 to seal the air inlet 313a. On the contrary, when a force of the gas inside the housing acting on the blocking member 321 is greater than the elastic force of the elastic member 322, the gas inside the housing can overcome the elastic force of the elastic member 322 and push the blocking member 321 to be separated from the bottom surface of the valve cavity 313, enabling the blocking member 321 to open the air inlet 313a, thereby enabling the gas inside the housing to enter the valve cavity 313 through the air inlet 313a and then to be discharged through the air outlet 313b.

As shown in FIG. 2, (a) in FIG. 2 is a schematic diagram of the one-way valve 30 in a non-opened state; and (b) in FIG. 2 is a schematic diagram of the one-way valve 30 in an opened state. The elastic member 322 provides an elastic force F1 to the blocking member 321, and the blocking member 321 is pressed to seal the air inlet 313a. When the force F2 of the gas inside the housing acting on the blocking member 321 is greater than the elastic force F1 of the elastic member 322, the gas inside the housing can overcome the elastic force of the elastic member 322 and push the blocking member 321 to open the air inlet 313a, so as to allow the gas inside the housing to enter the valve cavity 313 and then be discharged to the outside of the housing through the air outlet 313b. On the contrary, after the gas inside the housing is discharged and the force F2 of the gas inside the housing acting on the blocking member 321 is less than the elastic force F1 of the elastic member 322, the elastic member 322 can drive the blocking member 321 to reset to seal the air inlet 313a.

Optionally, the elastic member 322 is a component with elasticity, and it may be various structures, such as an elastic sheet, a spring, or elastic rubber. Exemplarily, the elastic member 322 is a spring. Using a spring as the elastic member 322 arranged in the valve cavity 313 not only facilitates assembly of the elastic member 322 and helps to reduce the difficulty in assembling the elastic member 322 in the valve cavity 313. On the other hand, it can, but also achieves the stability of a direction in which the elastic member 322 applies the elastic force to the blocking member 321. In some embodiments, a material of the elastic member 322 includes steel, iron, or aluminum. The elastic member 322 made of steel, iron, or aluminum has good toughness and can alleviate the phenomenon of elastic failure of the elastic member 322, helping to extend the service life of the elastic member 322.

Exemplarily, the elastic member 322 is a spring, and the sealing and opening of the valve cavity 313 are realized by deformation of the spring. During sealing of the valve cavity 313: an initial length of the spring may be set as L0, where the initial length is a natural length of the spring before compression; an assembly space for the spring in the valve cavity 313 is L1; and the valve cavity 313 is configured to realize L0 > L1. After assembly, the spring is compressed, so that a pressing force F1 is applied to the blocking member 321, enabling the blocking member 321 to be closely attached to a wall of the valve cavity 313 to achieve a sealing effect.

When an internal air pressure of the housing increases to a specific value P1, a force F2 applied by the air pressure to a lower surface 31222d of the blocking member 321 at that moment is greater than the pressing force F1 of the spring, a sealing interface becomes ineffective, and the gas inside the housing enters the valve cavity 313 and is discharged to the outside of the housing through a channel in the valve cavity 313. As the gas inside the housing is discharged, the internal air pressure decreases. When the air pressure reaches a specific value P2, the valve body 31 is closed to achieve sealing. The valve body 31 can realize repeated opening, gas exhaust, and closing, so that the internal air pressure of the housing is maintained between P1 and P2, thereby preventing the pressure relief mechanism 70 from opening the valve prematurely due to an excessive internal air pressure of the housing.

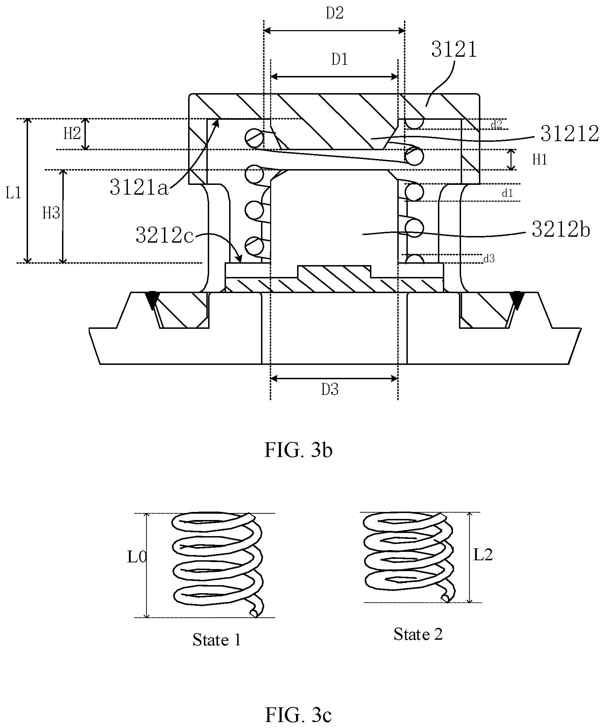

Reference is made to FIG. 2, FIG. 3a, and FIG. 3b in combination. where FIG. 3a is a schematic structural diagram of a blocking member 321 of a one-way valve 30 according to one or more embodiments; and FIG. 3b is a schematic diagram of a cross-sectional structure of a one-way valve 30 according to one or more embodiments. According to some embodiments of this application, the elastic member 322 is arranged along an axial direction Y of the valve cavity 313. Two ends of the elastic member 322 respectively abut against the blocking member 321 and a top surface of the valve cavity 313, and the elastic member 322 is in a compressed state and located between the top surface of the valve cavity 313 and the blocking member 321, so that the elastic member 322 can apply an elastic force to the blocking member 321, enabling the blocking member 321 to abut against the bottom surface of the valve cavity 313 to seal the air inlet 313a.

Further, a plurality of limiting protrusions 3212a may protrude from an outer circumferential surface of the blocking member 321. The plurality of limiting protrusions 3212a are spaced apart along a circumferential direction of the blocking member 321. The limiting protrusions 3212a are in guiding fit with a side surface of the valve cavity 313.

The limiting protrusions 3212a are in guiding fit with the side surface of the valve cavity 313, to be specific, the limiting protrusions 3212a are used to cooperate with a wall surface of the valve cavity 313 while the blocking member 321 is moving along the axial direction of the valve cavity 313, so as to play a guiding and limiting role. Certainly, in other embodiments, the one-way valve 30 may alternatively be other structures. For example, the side surface of the valve cavity 313 is provided with a guide groove (not shown in the figure) extending along the axial direction of the valve cavity 313. The limiting protrusions 3212a extend into the guide groove. The limiting protrusions 3212a can move in the guide groove along the axial direction of the valve cavity 313 when the blocking member 321 opens the air inlet 313a, so as to play a guiding and limiting role. The guide groove may be provided in plurality, and the plurality of guide grooves cooperate with the plurality of limiting protrusions 3212a respectively. Optionally, the limiting protrusion 3212a may have various shapes, for example, being a semicircular structure, a triangular structure, a trapezoidal structure, or a rectangular structure. Exemplarily, in FIG. 3a, the limiting protrusion 3212a is in a semicircular shape.

The plurality of limiting protrusions 3212a spaced apart protrude from the outer circumferential surface of the blocking member 321, and the limiting protrusions 3212a are in guiding fit with the side surface of the valve cavity 313, so that while the blocking member 321 is moving along the axial direction of the valve cavity 313, the blocking member 321 can be guided and limited by the cooperation of the limiting protrusions 3212a with the side surface of the valve cavity 313, so as to improve the stability of the movement of the blocking member 321.

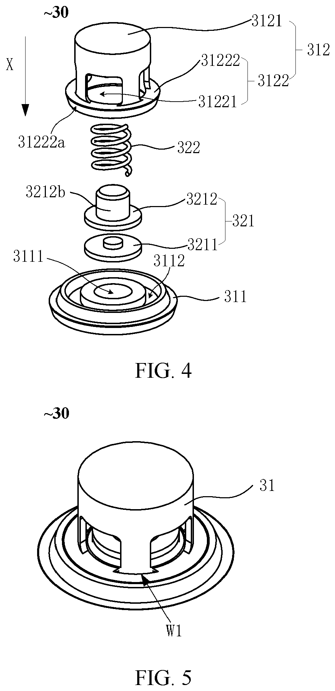

Reference is made to FIG. 2, FIG. 3b, and FIG. 4 in combination, where FIG. 4 is a schematic diagram of an exploded structure of a one-way valve 30 according to one or more embodiments. The valve body 31 includes a valve seat 311 and a valve cover 312. The valve cover 312 and the valve seat 311 enclose a valve cavity 313. Two ends of the elastic member 322 respectively abut against the blocking member 321 and a cover top wall 3121 of the valve cover 312. A first guide post 31211 may protrude from a side of the cover top wall 3121 facing the blocking member 321, and part of the elastic member 322 sleeves an outer side of the first guide post 31211 to position the elastic member 322.

Further, the blocking member 321 includes a pressing portion 3212 and a sealing portion 3211. The two ends of the elastic member 322 respectively abut against the valve cover 312 and the pressing portion 3212. The sealing portion 3211 is connected to a side of the pressing portion 3212 facing away from the valve cover 312. The sealing portion 3211 is used to seal the air inlet 313a. Stiffness of the pressing portion 3212 is greater than stiffness of the sealing portion 3211. The sealing portion 3211 is connected to a side of the pressing portion 3212 facing away from the cover top wall 3121. The sealing portion 3211 is used to seal the air inlet 313a. The elastic member 322 is arranged between the cover top wall 3121 and the pressing portion 3212. The pressing portion 3212 can be pressed against the sealing portion 3211 under an elastic force of the elastic member 322, so that an upper surface 31222c of the sealing portion 3211 is in effective contact with the pressing portion 3212, enabling the sealing portion 3211 abut against the bottom surface of the valve cavity 313, thereby enabling the sealing portion 3211 to seal the air inlet 313a.

According to some embodiments of this application, the stiffness of the pressing portion 3212 is greater than the stiffness of the sealing portion 3211. The arrangement of the pressing portion 3212 can effectively transmit a force applied by the elastic member 322 to the sealing portion 3211. In other words, the stiffness of the pressing portion 3212 is greater than the stiffness of the sealing portion 3211, meaning that a deformation resistance of the pressing portion 3212 is greater than a deformation resistance of the sealing portion 3211, so that the pressing portion 3212 can better press the sealing portion 3211 against a bottom surface of an installation cavity to seal the air inlet 313a. Exemplarily, the pressing portion 3212 may be made of various materials, such as steel, iron, or aluminum. Similarly, the sealing portion 3211 may also be made of various materials, such as rubber, silicone, or plastic.

Optionally, the pressing portion 3212 and the sealing portion 3211 may be connected by various structures, for example, by snap connection, bolt connection, or bonding.

The blocking member 321 is configured to include two parts, namely the pressing portion 3212 and the sealing portion 3211, where the pressing portion 3212 is arranged on a side of the sealing portion 3211 facing the valve cover 312, the sealing portion 3211 is used to seal the air inlet 313a, and the two ends of the elastic member 322 respectively abut against the valve cover 312 and the pressing portion 3212, so that the elastic member 322 can apply an elastic force to the sealing portion 3211 through the pressing portion 3212, helping to improve the uniformity of the elastic force of the elastic member 322 applied to the sealing portion 3211, thereby effectively improving a sealing effect of the sealing portion 3211 on the air inlet 313a.

According to some embodiments of this application, the material of the sealing portion 3211 is selected from materials that can withstand electrolyte solutions, such as fluororubber, PFA, and ethylene propylene diene monomer. Different sealing materials have different physical properties, and accordingly require different forces to achieve sealing.

Exemplarily, the limiting protrusion 3212a protrudes from the outer circumferential surface of the pressing portion 3212. Certainly, in other embodiments, the entire blocking member 321 may alternatively be a sealing component, such as a rubber pad or a silicone pad. To be specific, the blocking member 321 includes only the sealing portion 3211, and the two ends of the elastic member 322 respectively abut against the valve cover 312 and the sealing portion 3211. Certainly, in other embodiments, the entire valve core 32 may alternatively be an elastic component, such as elastic rubber.

Similarly, a second guide post 3212b may protrude from a side of the pressing portion 3212 facing the cover top wall 3121, and part of the elastic member 322 sleeves an outer side of the second guide post 3212b.

The one-way valve 30 with this structure can, on the one hand, achieve a certain positioning effect for the elastic member 322 through the first guide post 31211 and the second guide post 3212b, to facilitate the assembly of the elastic member 322 and help to reduce the assembly difficulty of the elastic member 322, and on the other hand, can achieve a guiding effect by the first guide post 31211 and the second guide post 3212b when the elastic member 322 is compressed, to reduce the phenomenon of radial deformation of the elastic member 322 during compression. Thus, the elastic member 322 is stably compressed, which helps to improve the use reliability of the elastic member 322, and thus can reduce the risk of the blocking member 321 mistakenly opening the air inlet 313a. The elastic member 322 may be a spring. Certainly, in other embodiments, the elastic member 322 may alternatively be an elastic sheet or elastic rubber.

Reference is made to FIG. 3b and FIG. 3c in combination, where FIG. 3c is a schematic diagram of a state of an elastic member 322 according to one or more embodiments. According to some embodiments of this application, two ends of the elastic member 322 respectively abut against a side surface of the valve cover 312 facing the valve cavity 313 and a side surface of the pressing portion 3212 facing the valve cover 312, and a distance therebetween is an assembly space L1 for the elastic member 322. Specifically, the cover top wall 3121 has a side surface 3121a facing the valve cavity 313, the pressing portion 3212 has a side surface 3212c facing the cover top wall 3121, and L1 is a distance between the surface 3121a and the surface 3212c.

According to some embodiments of this application, along the axial direction Y of the valve cavity 313, a size of a gap between the valve cover 312 and the blocking member 321 is H1, which satisfies 0 mm < H1 ≤ 0.5 mm.

A first guide post 31211 protrudes from a side of the valve cover 312 facing the blocking member 321, and a second guide post 3212b protrudes from a side of the blocking member 321 facing the valve cover 312. The gap between the valve cover 312 and the blocking member 321 is a spacing between an end surface of a side of the first guide post 31211 away from the valve cover 312 and an end surface of a side of the second guide post 3212b close to the valve cover 312, as H1 shown in FIG. 3b. In other words, in the axial direction Y of the valve cavity 313, a sum of a height H2 of the first guide post 31211 and a height H3 of the second guide post 3212b is less than an assembly space L for the elastic member 322, that is, in the axial direction, height H2 of first guide post 31211 + height H3 of second guide post 3212b < compression space L1 of spring.

Exemplarily, the size H1 of the gap between the valve cover 312 and the blocking member 321 may be 0.1 mm, 0.2 mm, 0.3 mm, 0.4 mm, 0.5 mm, or the like.

By setting the size of the gap between the valve cover 312 and the blocking member 321 in the axial direction Y to be greater than 0 mm and less than or equal to 5 mm, on the one hand, the obstruction of the blocking member 321 by the valve cover 312 can be reduced, so that there is space between the valve cover 312 and the blocking member 321 for the blocking member 321 to move along the axial direction Y, and thus when the gas inside the housing pushes the blocking member 321, the blocking member 321 can open the air inlet 313a for gas exhaust. On the other hand, the phenomenon that the one-way valve 30 occupies too much space in the axial direction Y due to an excessive gap between the valve cover 312 and the blocking member 321 can be alleviated, thereby helping to improve the space utilization rate of the battery cell 20.

As shown in FIG. 3c, the elastic member 322 being a spring is used as an example, an initial length L0 of the spring is a natural length of the spring before compression; and by setting L0 > L1, the spring can have a specific initial elastic force after being assembled into the valve cavity 313, so as to push the sealing portion 3211 to press against the wall surface of the valve cavity 313, improving the sealing performance.

Further, an entity length L2 of the spring is set to satisfy L1 > L2, where the entity length of the spring is a length of a spring body after the spring is completely compressed. As shown in FIG. 3c, state 1 in FIG. 3c is an uncompressed state of the spring, and in this state, there is a gap between entity structures of the spring, so that the spring can be further compressed; and state 2 in FIG. 3c is a completely compressed state of the spring, and in this state, there is no gap between the entity structures of the spring, so that the spring cannot be further compressed. The entity length L2 of the spring is equal to d1*n1 + d2 + d3, where d1 is a wire diameter of the spring, n1 is a maximum number of turns of the spring in the axial direction, d2 is a thickness of an outermost portion of one end of the spring, and d3 is a thickness of an outermost portion of the other end of the spring. As shown in FIGS. 3b and 3c, the spring is a spiral cylindrical coil, and the wire diameter d1 of the spring is a diameter of the main body of each turn of the spring. As the number of spiral turns increases, a length occupied by an entity of the spring is a sum of the entities of each turn of the spring, that is, d1*n1. As shown in FIG. 3b, the number of turns of the spring is 4, and the entity length of this part after complete compression is d1*4. A tail end of the spring may be flattened by grinding to facilitate assembly. The so-called flattening by grinding means that a part of the entity of the originally cylindrical spring is ground to make a top surface of the spring flatter; and after the grinding, the entity of the spring becomes thinner, that is, it is no longer in a completely cylindrical shape, so that the thicknesses d2 and d3 of the entity of the spring in this zone are less than the wire diameter d1 of the spring. Certainly, in some embodiments, the tail end of the spring may not be processed, and in this case, the thickness of the entity of the spring is equal to the wire diameter d1 of the spring, that is, d2 ≤ d1, and d3 ≤ d1. Therefore, an overall length of the entity of the spring satisfies L2 = d1*n1 + d2 + d3. By setting L1 > L2, the spring is not completely compressed after assembly, and there is still space for compression and movement.

According to some embodiments of this application, a compression margin of the elastic member 322 that is in a compressed state and located between the valve cover 312 and the blocking member 321 is greater than or equal to 0.5 mm, that is, L1 - L2 > 0.5 mm. Thus, the elastic member 322 has a sufficient compression margin for the blocking member 321 to move along the axial direction Y of the valve cavity 313, so that the blocking member 321 can open the air inlet 313a. If the elastic member 322 is a spring, in the axial direction Y of the valve cavity 313, a sum of gaps between the turns of the spring is greater than or equal to 0.5 mm. Exemplarily, L1 - L2 may be 0.1 mm, 0.2 mm, 0.3 mm, 0.4 mm, 0.5 mm, or the like.

Reference is still made to FIG. 3b. According to some embodiments of this application, a diameter of the first guide post 31211 is D1, and an inner diameter of the elastic member 322 is D2, satisfying 0 mm < D2 - D1 ≤ 5 mm.

The elastic member 322 is a spring, and the inner diameter D2 of the elastic member 322 is a diameter of a cavity formed inside the spring. 0 mm < D2 - D1 ≤ 5 mm, that is, when the first guide post 31211 and the elastic member 322 are arranged coaxially, a size of a gap between the first guide post 31211 and the elastic member 322 is greater than 0 mm and less than or equal to 5 mm.

Exemplarily, a difference between the inner diameter of the elastic member 322 and the diameter of the first guide post 31211 may be 0 mm, 0.1 mm, 0.2 mm, 0.5 mm, 0.8 mm, 1 mm, 1.2 mm, 1.5 mm, 2 mm, 2.5 mm, 3 mm, 3.5 mm, 4 mm, 4.5 mm, 5 mm, or the like.

The difference between the inner diameter of the elastic member 322 and the diameter of the first guide post 31211 is set to be greater than 0 mm and less than or equal to 5 mm. This, on the one hand, can alleviate the phenomenon that the elastic member 322 is inconvenient to assemble on the first guide post 31211 as the difference between the inner diameter of the elastic member 322 and the diameter of the first guide post 31211 is less than or equal to 0, so as to reduce the phenomenon of scraping caused while the elastic member 322 is sleeving the first guide post 31211, and on the other hand, can alleviate the phenomenon that the gap between the elastic member 322 and the first guide post 31211 is too large due to the excessive difference between the inner diameter of the elastic member 322 and the diameter of the first guide post 31211, so as to reduce the situation of radial movement or radial deformation of the elastic member 322, improving the uniformity of the elastic force of the elastic member 322 acting on the blocking member 321, thereby reducing the risk of the blocking member 321 mistakenly opening the air inlet 313a.

Reference is still made to FIG. 3b. According to some embodiments of this application, a diameter of the second guide post 3212b is D3, and the inner diameter of the elastic member 322 is D2, satisfying 0 mm < D3 - D1 ≤ 5 mm.

The elastic member 322 is a spring, and the inner diameter D2 of the elastic member 322 is a diameter of a cavity formed inside the spring.

0 mm < D3 - D1 ≤ 5 mm, that is, when the second guide post 3212b and the elastic member 322 are arranged coaxially, a size of a gap between the second guide post 3212b and the elastic member 322 is greater than 0 mm and less than or equal to 5 mm.

Exemplarily, a difference between the inner diameter of the elastic member 322 and the diameter of the second guide post 3212b may be 0 mm, 0.1 mm, 0.2 mm, 0.5 mm, 0.8 mm, 1 mm, 1.2 mm, 1.5 mm, 2 mm, 2.5 mm, 3 mm, 3.5 mm, 4 mm, 4.5 mm, 5 mm, or the like.

The difference between the inner diameter of the elastic member 322 and the diameter of the second guide post 3212b is set to be greater than 0 mm and less than or equal to 5 mm. This, on the one hand, can alleviate the phenomenon that the elastic member 322 is inconvenient to assemble on the second guide post 3212b as the difference between the inner diameter of the elastic member 322 and the diameter of the second guide post 3212b is less than or equal to 0, so as to reduce the phenomenon of scraping caused while the elastic member 322 is sleeving the second guide post 3212b, and on the other hand, can alleviate the phenomenon that the gap between the elastic member 322 and the second guide post 3212b is too large due to the excessive difference between the inner diameter of the elastic member 322 and the diameter of the second guide post 3212b, so as to reduce the situation of radial movement or radial deformation of the elastic member 322, improving the uniformity of the elastic force of the elastic member 322 acting on the blocking member 321, thereby reducing the risk of the blocking member 321 mistakenly opening the air inlet 313a.

In these embodiments, by arranging the valve core 32 in the valve cavity 313, the valve core 32 can seal the air inlet channel, and when the pressure inside the housing rises, the gas inside the housing can act on the valve core 32 and drive the valve core 32 to open the air inlet channel, so as to realize a unidirectional gas exhaust function of the one-way valve 30, and thus the one-way valve 30 can discharge the gas inside the housing to the outside of the housing.

According to some embodiments of this application, an opening pressure of the valve core 32 is greater than or equal to 0.2 MPa, optionally greater than or equal to 0.4 MPa, and more optionally greater than or equal to 0.8 MPa. Exemplarily, the opening pressure of the valve core 32 may be 0.20 MPa, 0.25 MPa, 0.30 MPa, 0.35 MPa, 0.40 MPa, 0.45 MPa, 0.50 MPa, 0.55 MPa, 0.60 MPa, 0.65 MPa, 0.70 MPa, 0.75 MPa, 0.80 MPa, 0.90 MPa, or 1.00 MPa.

An opening pressure test method and principle of the one-way valve may be based on the helium leak standard. The helium leak standard is defined as: if a leak rate is less than 10^-6Pa.m^3/s, a system is considered to be sealed; and if the leak rate is greater than 10^-6Pa.m^3/s, it indicates that there is gas leakage in the system.

During detection, the one-way valve is used to seal a test chamber, helium is introduced into the test chamber, and a helium detector is used to monitor an amount of helium in the environment where the test chamber is located. If helium is detected and a leak rate is greater than 10^-6Pa.m^3/s, it indicates that the test chamber is not sealed and helium is leaking out. The leak rate of helium is continuously monitored. When the leak rate is greater than 10^-5Pa.m^3/s, it is determined that the one-way valve is opened to release gas, and a pressure in the test chamber at that moment is recorded as the opening pressure of the one-way valve.

According to some embodiments of this application, the battery cell 20 includes an end cover 21. The end cover 21 includes an outer surface 21a and an inner surface 21b arranged back to back. The outer surface 21a faces the outside of the housing, and the inner surface 21b faces the inside of the housing. The one-way valve 30 is arranged on the end cover 21. The valve body 31 of the one-way valve 30 may face the outside of the housing and at least part of the valve body 31 protrudes from the outer surface 21a of the end cover 21; or the valve body 31 of the one-way valve 30 may face the inside of the housing and at least part of the valve body 31 protrudes from the inner surface 21b of the end cover 21.

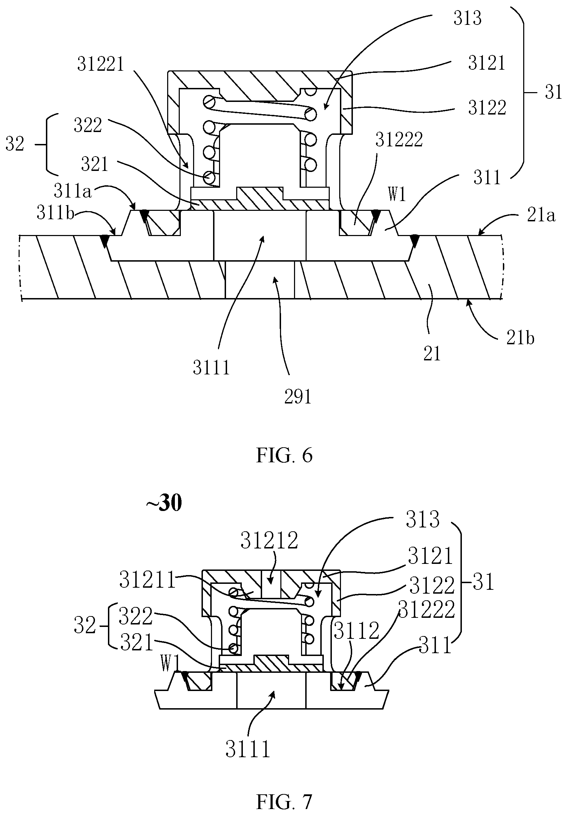

Reference is made to FIG. 4, FIG. 5, and FIG. 6 in combination, where FIG. 5 is a front view of a one-way valve 30 according to one or more embodiments, and FIG. 6 is a schematic diagram of a partial cross-sectional structure of a battery cell 20 according to one or more embodiments. According to some embodiments of this application, the end cover 21 includes an outer surface 21a and an inner surface 21b arranged back to back. The outer surface 21a faces the outside of the housing, and the inner surface 21b faces the inside of the housing. The one-way valve 30 is arranged on the end cover 21, the valve body 31 of the one-way valve 30 is arranged on the outer surface 21a, and at least part of the valve body 31 protrudes from the outer surface 21a of the end cover 21.

In these embodiments, the one-way valve 30 includes a valve body 31 and a valve core 32. The valve body 31 has a valve cavity 313 inside, and the valve core 32 is arranged in the valve cavity 313. The valve body 31 includes a valve seat 311 and a valve cover 312. The valve cover 312 includes a cover top wall 3121 and a cover side wall 3122 connected to the cover top wall 3121. The cover top wall 3121, the cover side wall 3122, and the valve seat 311 enclose the valve cavity 313. The valve seat 311 is provided with an air inlet 313a of the valve cavity 313 to enable communication between the valve cavity 313 and the inside of the housing; and the valve cover 312 is provided with an air outlet 313b of the valve cavity 313 to enable communication between the valve cavity 313 and the outside of the housing. The valve core 32 is used to seal an air inlet channel of the valve cavity 313. The valve core 32 is configured to open the air inlet channel under the action of the gas inside the housing and release the gas inside the battery cell 20. In these embodiments, the valve core 32 directly seals the air inlet 313a of the valve cavity 313; and the air inlet channel includes a gas flow path from the inside of the housing of the battery cell 20 to the air inlet 313a of the valve cavity 313 and then to an air outlet side of the air inlet 313a.

In these embodiments, the valve body 31 of the one-way valve 30 is provided with a valve seat 311 and a valve cover 312. In the one-way valve 30 with this structure, the valve body 31 is configured to include two parts, facilitating the assembly of the valve core 32 into the valve cavity 313, thereby helping to reduce the assembly difficulty of the one-way valve 30.

Reference is still made to FIG. 4 and FIG. 6. According to some embodiments of this application, the valve seat 311 has a first through hole 3111 extending through the valve seat 311, and the air inlet 313a is the first through hole 3111, that is, the first through hole 3111 is used as the air inlet 313a of the valve cavity 313. The cover side wall 3122 has a second through hole 31221 extending through the cover side wall 3122, and the air outlet 313b is the second through hole 31221, that is, the second through hole 31221 is used as the air outlet 313b of the valve cavity 313. Such arrangement can facilitate outward transmission of the gas inside the battery 100.

According to some embodiments of this application, along a direction facing away from the cover top wall 3121, the second through hole 31221 extends to an end portion of the cover side wall 3122. As shown in FIG. 4, the direction facing away from the cover top wall 3121 is a direction from the cover top wall 3121 to the valve seat 311 (a direction X in the figure). The second through hole 31221 is formed by removing part of the structure of the cover side wall 3122. Along the direction X, the cover side wall 3122 is directly hollowed out to a bottom end of the cover side wall 3122. In a further embodiment, along the direction X, a lower opening surface of the second through hole 31221 may be flush with a sealing surface of the blocking member 321, that is, the sealing interface is higher than or flush with a bottom wall of the second through hole 31221. Through such arrangement, when the one-way valve 30 is opened for gas exhaust, that is, when the blocking member 321 opens a sealing interface, an electrolyte solution taken out with the gas can be discharged outward in time, so that the electrolyte solution is less likely to accumulate on an outer edge of the blocking member 321, thereby effectively ensuring the sealing and repeated opening function of the one-way valve 30.

According to some embodiments of this application, the second through hole 31221 is provided in plurality, and the plurality of second through holes 31221 are spaced apart in a circumferential direction of the cover side wall 3122. Through such arrangement, when the one-way valve 30 is opened for gas exhaust, the gas can be discharged more quickly, shortening the exhaust time, that is, shortening the time during which the housing of the battery 100 is in an open state, thereby reducing intrusion of external water vapor into a system of the battery 100 while the valve is opened.

Reference is made to FIG. 7, where FIG. 7 is a schematic diagram of a cross-sectional structure of a one-way valve 30 according to one or more embodiments. According to some embodiments of this application, a first guide post 31211 protrudes from a side of the cover top wall 3121 facing the blocking member 321, and part of the elastic member 322 sleeves an outer side of the first guide post 31211. The cover top wall 3121 has a third through hole 31212 extending through the cover top wall 3121 and the first guide post 31211, and the air outlet 313b is the third through hole 31212. That is, the third through hole 31212 is used as the air outlet 313b of the valve cavity 313. Such arrangement can facilitate outward transmission of the gas inside the battery 100.

Reference is still made to FIG. 4, FIG. 5, FIG. 6, and FIG. 7. According to some embodiments of this application, the valve cover 312 further includes a flanged wall 31222. The cover side wall 3122 connects the cover top wall 3121 and the flanged wall 31222. The flanged wall 31222 extends relative to the cover side wall 3122 toward a side away from the valve cavity 313. The flanged wall 31222 is connected to the valve seat 311.

According to some embodiments of this application, the valve cover 312 is connected to the valve seat 311. Specifically, a side of the valve seat 311 facing the valve cover 312 is provided with a first sinking groove 3112 recessed relative to a surface of the valve seat 311. At least part of the flanged wall 31222 is accommodated in the first sinking groove 3112 and connected to the valve seat 311.

In these embodiments, since the side of the valve seat 311 facing the valve cover 312 is provided with the first sinking groove 3112, and at least part of the flanged wall 31222 is accommodated in the first sinking groove 3112, the one-way valve 30 with this structure can, on the one hand, reduce space occupied by the valve body 31 in a thickness direction of the end cover 21, and on the other hand, can improve the structural stability of the valve cover 312 assembled on the valve seat 311.

According to some embodiments of this application, the flanged wall 31222 is accommodated in the first sinking groove 3112 and connected to the valve seat 311. A thickness of the flanged wall 31222 is less than or equal to a depth of the first sinking groove 3112, so that after the flanged wall 31222 is connected to the valve seat 311, a surface of the flanged wall 31222 facing the cover top wall 3121 is flush with a surface of the valve seat 311 facing the valve cover 312; or the surface of the flanged wall 31222 facing the cover top wall 3121 is lower than the surface of the valve seat 311 facing the valve cover 312. As shown in FIG. 6 and FIG. 7, after the valve cover 312 is connected to the valve seat 311, the surfaces of the flanged wall 31222 and the valve seat 311 are flush with each other. Such arrangement can reduce the overall installation height of the one-way valve 30.

According to some embodiments of this application, the valve seat 311 may be made of a metal material, such as copper, iron, aluminum, steel, or aluminum alloy. Similarly, the valve cover 312 may also be made of a metal material, such as copper, iron, aluminum, steel, or aluminum alloy. The valve seat 311 and the valve cover 312 may be made of a same material or different materials. The valve cover 312 and the valve seat 311 may be assembled by welding (such as laser welding), or may be assembled by mechanical interference fit, but a static friction force generated by interference needs to be greater than a rebound force of the elastic member 322.

According to some embodiments of this application, the flanged wall 31222 is welded to the valve seat 311. Specifically, the flanged wall 31222 is an annular component with a specific thickness, and an outer circumferential surface of the flanged wall 31222 is used as a connecting surface 31222a to be welded to a wall surface of the first sinking groove 3112. Further, the connecting surface 31222a of the flanged wall 31222 may be configured as an inclined surface, and accordingly the wall surface of the first sinking groove 3112 is also configured as an inclined surface, so that the connecting surface 31222a of the flanged wall 31222 fits with the wall surface of the first sinking groove 3112. As shown in FIG. 6 and FIG. 7, the flanged wall 31222 and the first sinking groove 3112 may form a fitting structure. Such manner can improve the welding quality and enhance the strength and stability of the connection. Furthermore, it is preferred that the valve cover 312 and the valve seat 311 are made of a same material to achieve better welding quality.

According to some embodiments of this application, in a circumferential direction of the cover side wall 3122, at least part of a first weld mark W1 formed by welding of the flanged wall 31222 and the valve seat 311 is staggered from the second through hole 31221. As shown in FIG. 5, welding may be performed at a position on the cover side wall 3122 where no second through hole 31221 is provided. The first weld mark W1 may be provided in plurality, and the plurality of first weld marks W1 are distributed in the circumferential direction of the cover side wall 3122. The distribution of the first weld marks W1 may be staggered from the distribution of the second through holes 31221. To be specific, a plurality of second through holes 31221 are spaced apart in the circumferential direction of the cover side wall 3122, an entity wall is present at a position between adjacent second through holes 31221 where no hole is provided, and welding is performed at the position where the entity wall is located. Such manner can shield heat for the entity wall to some extent, which can protect the blocking member 321 of the valve core 32, and reduce the impact of high temperature on the blocking member 321 during welding. Thus, deformation of the blocking member 321 caused by heat is prevented, so as not to cause ineffectiveness of the sealing interface when the valve is not opened.

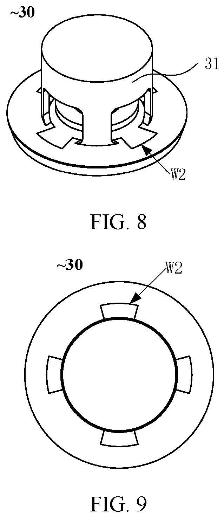

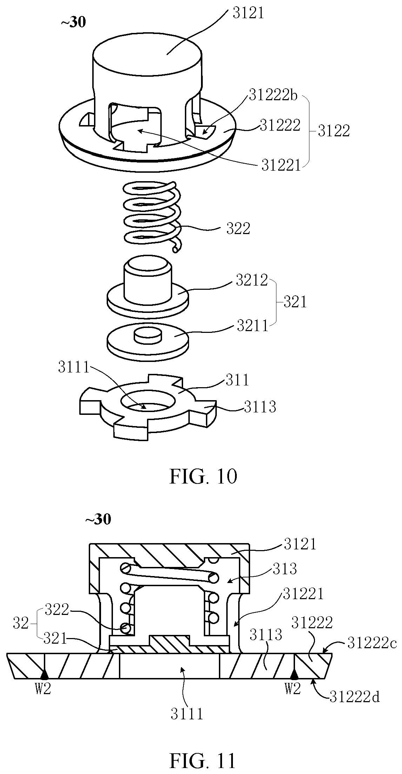

Reference is made to FIG. 8, FIG. 9, FIG. 10, and FIG. 11 in combination, where FIG. 8 is a front view of a one-way valve 30 according to one or more embodiments, FIG. 9 is a bottom view of a one-way valve 30 according to one or more embodiments, FIG. 10 is a schematic diagram of an exploded structure of a one-way valve 30 according to one or more embodiments, and FIG. 11 is a schematic diagram of a partial cross-sectional structure of a battery cell 20 according to one or more embodiments. According to some embodiments of this application, the valve seat 311 is connected to the valve cover 312. Specifically, the valve cover 312 includes a flanged wall 31222, and the valve seat 311 is connected to the flanged wall 31222. In other words, the valve seat 311 is connected to the flanged wall 31222 of the valve cover 312.

According to some embodiments of this application, a connecting protrusion 3113 protrudes from an outer circumferential surface of the valve seat 311, and an inner circumferential surface of the flanged wall 31222 is provided with an accommodating groove 31222b. The connecting protrusion 3113 is accommodated in the accommodating groove 31222b and connected to the flanged wall 31222.

The connecting protrusion 3113 is provided in plurality, and the plurality of connecting protrusions 3113 are spaced apart along a circumferential direction of the valve seat 311. Correspondingly, the accommodating groove 31222b is provided in plurality, and the number of the connecting protrusions 3113 is the same as the number of the accommodating grooves 31222b. The connecting protrusion 3113 fits with the accommodating groove 31222b in shape, so that the connecting protrusion 3113 can be accommodated in the accommodating groove 31222b. Through such arrangement, after the valve cover 312 is connected to the valve seat 311, surfaces of the flanged wall 31222 and the valve seat 311 are flush with each other. In this way, the valve seat 311 is embedded into the valve cover 312, which can reduce the overall installation height of the one-way valve 30. From comparison between FIG. 6 and FIG. 11, in the solution of FIG. 6, the valve cover 312 is connected to the valve seat 311, and an installation height of the valve cover 312 is a thickness of the valve cover 312 plus part of a thickness of the valve seat 311; and in the solution of FIG. 11, the valve seat 311 is connected to the valve cover 312, the valve seat 311 is entirely accommodated, and an installation height of the valve seat 311 is the thickness of the valve cover 312, where as compared with the former, the installation height in these embodiments is smaller, reducing the space occupancy rate.

According to some embodiments of this application, the connecting protrusion 3113 is welded to the flanged wall 31222. The flanged wall 31222 has an upper surface 31222c and a lower surface 31222d arranged back to back. The upper surface 31222c faces the cover top wall 3121. A second weld mark W2 formed by welding of the connecting protrusion 3113 and the flanged wall 31222 of the cover side wall 3122 is located on the lower surface 31222d of the flanged wall 31222. That is, welding is performed from a lower side of the valve cover 312 and the valve seat 311. As shown in FIG. 11, the second weld mark W2 is located on a side away from the valve cavity 313. Such manner shields heat for the valve seat 311 and the flanged wall 31222 to some extent, which can protect the blocking member 321 of the valve core 32, and reduce the impact of high temperature on the blocking member 321 during welding. Thus, deformation of the blocking member 321 caused by heat is prevented, so as not to cause ineffectiveness of the sealing interface when the valve is not opened.

Reference is made to FIG. 12, where FIG. 12 is a schematic diagram of a partial cross-sectional structure of a battery cell 20 according to one or more embodiments. According to some embodiments of this application, the one-way valve 30 is arranged on the outer surface 21a of the end cover 21, the valve body 31 of the one-way valve 30 faces the outside of the housing, and at least part of the valve body 31 protrudes from the outer surface 21a of the end cover 21.

In these embodiments, the one-way valve 30 includes a valve body 31 and a valve core 32. The valve body 31 has a valve cavity 313 inside, and the valve core 32 is arranged in the valve cavity 313. The valve body 31 includes a valve cover 312. The valve cover 312 includes a cover top wall 3121 and a cover side wall 3122 connected to the cover top wall 3121. The cover top wall 3121, the cover side wall 3122, and the end cover 21 enclose the valve cavity 313. The end cover 21 is provided with an air inlet 313a of the valve cavity 313 to enable communication between the valve cavity 313 and the inside of the housing; and the valve cover 312 is provided with an air outlet 313b of the valve cavity 313 to enable communication between the valve cavity 313 and the outside of the housing. The valve core 32 is used to seal an air inlet channel of the valve cavity 313. The valve core 32 is configured to open the air inlet channel under the action of the gas inside the housing and release the gas inside the battery cell 20. In these embodiments, the valve core 32 directly seals the air inlet 313a of the valve cavity 313. The air inlet channel includes a gas flow path from the inside of the housing of the battery cell 20 to the air inlet 313a of the valve cavity 313 and then to an air outlet side of the air inlet 313a.

In these embodiments, the valve body 31 of the one-way valve 30 may have only the valve cover 312 rather than the valve seat 311, and the valve cover 312 is directly connected to the end cover 21. In other words, the end cover 21 may be used as the valve seat 311 of the valve body 31. Such manner can reduce the installation height of the one-way valve 30. From the comparison between FIG. 6, FIG. 11, and FIG. 12, in the solution of FIG. 6, the valve cover 312 is connected to the valve seat 311, and an installation height of the valve cover 312 is the thickness of the valve cover 312 plus part of the thickness of the valve seat 311 as well as part of the thickness of the end cover 21; in the solution of FIG. 11, the valve seat 311 is connected to the valve cover 312, the valve seat 311 is entirely accommodated, and an installation height of the valve seat 311 is the thickness of the valve cover 312 plus part of the thickness of the end cover 21; and in the solution of FIG. 12, the valve cover 312 may be embedded into the end cover 21, and an installation height of the valve cover 312 may be the thickness of the end cover 21, where the comparison between the three solutions show that the installation height in these embodiments is smaller, reducing the space occupancy rate.

According to some embodiments of this application, the end cover 21 is provided with a first exhaust hole 291. The first exhaust hole 291 enables communication between the inside of the housing and the outside of the housing. The air inlet 313a is the first exhaust hole 291, that is, the first exhaust hole 291 is used as the air inlet 313a of the valve cavity 313. The cover side wall 3122 has a second through hole 31221 extending through the cover side wall 3122, and the air outlet 313b is the second through hole 31221, that is, the second through hole 31221 is used as the air outlet 313b of the valve cavity 313. Such arrangement can facilitate outward transmission of the gas inside the battery 100. In other embodiments, the air outlet 313b may alternatively be a third through hole 31212 located on the cover top wall 3121 and extending through the cover top wall 3121 and the first guide post 31211. For details, reference is made to FIG. 7 and the previous descriptions, which are not repeated herein.

According to some embodiments of this application, a side of the end cover 21 facing the outside of the housing is provided with a second sinking groove (not labeled in the figure) recessed relative to the outer surface 21a of the end cover 21. At least part of the flanged wall 31222 of the valve cover 312 is accommodated in the second sinking groove and connected to the end cover 21.

In these embodiments, since the side of the end cover 21 facing the outside of the housing is provided with the second sinking groove, and at least part of the flanged wall 31222 is accommodated in the second sinking groove, the one-way valve 30 with this structure can reduce space occupied by the valve body 31 in the thickness direction of the end cover 21.

According to some embodiments of this application, the flanged wall 31222 is accommodated in the second sinking groove and connected to the end cover 21. The thickness of the flanged wall 31222 is less than or equal to a depth of the second sinking groove, so that after the flanged wall 31222 is connected to the end cover 21, the surface of the flanged wall 31222 facing the cover top wall 3121 is flush with a surface of the end cover 21 facing the outside of the housing; or the surface of the flanged wall 31222 facing the cover top wall 3121 is lower than the surface of the end cover 21 facing the outside of the housing. As shown in FIG. 12, after the valve cover 312 is connected to the end cover 21, the surfaces of the flanged wall 31222 and the end cover 21 are flush with each other. Such arrangement can reduce the overall installation height of the one-way valve 30.

According to some embodiments of this application, the flanged wall 31222 is welded to the end cover 21. Specifically, the flanged wall 31222 is an annular component with a specific thickness, and the outer circumferential surface of the flanged wall 31222 is used as a connecting surface 31222a to be welded to a wall surface of the second sinking groove. Further, the connecting surface 31222a of the flanged wall 31222 may be configured as an inclined surface, and accordingly the wall surface of the second sinking groove is also configured as an inclined surface, so that the connecting surface 31222a of the flanged wall 31222 fits with the wall surface of the second sinking groove. As shown in FIG. 12, the flanged wall 31222 and the second sinking groove may form a fitting structure. Such manner can improve the welding quality and enhance the strength and stability of the connection. Furthermore, it is preferred that the valve cover 312 and the end cover 21 are made of the same material to achieve better welding quality. For example, both are made of an aluminum material.

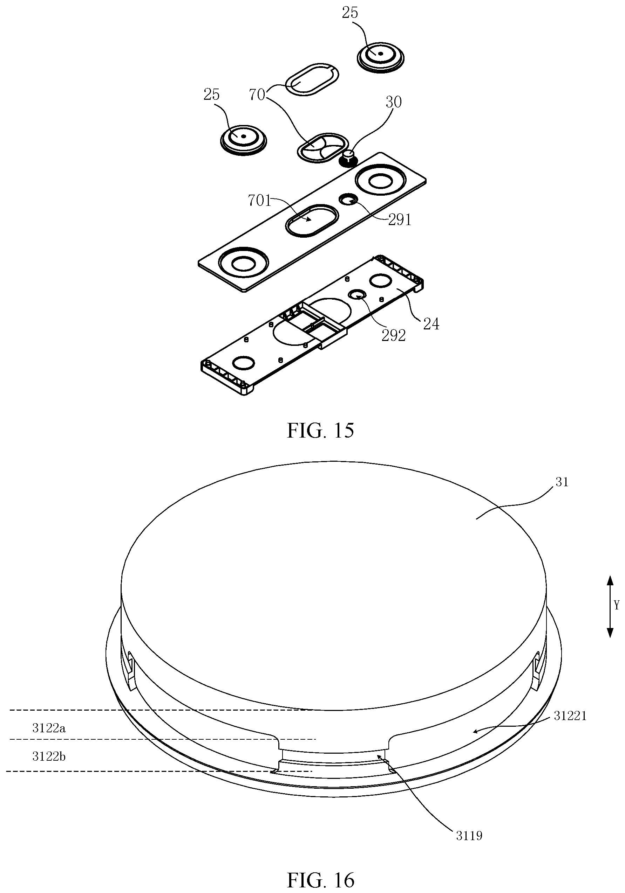

Reference is made to FIG. 6, FIG. 13, FIG. 14, and FIG. 15 in combination, where FIG. 13 is a schematic diagram of a partial cross-sectional structure of an end cover 21 according to one or more embodiments, FIG. 14 is a front view of an end cover 21 of a battery cell 20 according to one or more embodiments, and FIG. 15 is a schematic diagram of a partial exploded structure of a battery cell 20 according to one or more embodiments. According to some embodiments of this application, the one-way valve 30 is arranged on the end cover 21, the valve body 31 of the one-way valve 30 faces the outside of the housing, and at least part of the valve body 31 protrudes from the outer surface 21a of the end cover 21.

The end cover 21 is provided with a first exhaust hole 291. The first exhaust hole 291 includes a through hole section 280 and a first hole section 281. The through hole section 280 and the first hole section 281 are arranged along the thickness direction of the end cover 21. The through hole section 280 enables communication between the inside of the housing and the outside of the housing. The first hole section 281 is located on a side of the through hole section 280 facing away from the inside of the housing. An aperture of the first hole section 281 is greater than an aperture of the through hole section 280. At least part of the one-way valve 30 is accommodated in the first hole section 281. The valve body 31 of the one-way valve 30 faces the outside of the housing, and at least part of the valve body 31 protrudes from the outer surface 21a of the end cover 21. As shown in FIG. 13, the first exhaust hole 291 is a countersunk hole recessed relative to the outer surface 21a of the end cover 21. When the one-way valve 30 is connected to the end cover 21, part of the structure of the one-way valve 30 can be embedded into the first exhaust hole 291 to reduce the installation height.

Reference is made to FIG. 6. According to some embodiments of this application, the side of the valve seat 311 facing the valve cover 312 is provided with a first step surface 311b and a second step surface 311c. The first step surface 311b is closer to the valve cover 312 than the second step surface 311c. The first sinking groove 3112 is provided on the first step surface.

The first hole section 281 includes a circumferentially arranged hole side surface. An outer circumferential surface of the valve cover 312/valve seat 311 of the one-way valve 30 is welded to the hole side surface, where an outer circumferential surface of the second step is welded to the hole side surface.

According to some embodiments of this application, the hole side surface fits with the outer circumferential surface of the valve cover 312/valve seat 311 of the one-way valve 30, and both the hole side surface and the outer circumferential surface of the valve cover 312/valve seat 311 of the one-way valve 30 are arranged at an acute angle with a central axis of the first exhaust hole 291. Such arrangement can enhance the connection strength.

According to some embodiments of this application, the one-way valve 30 is welded to the end cover 21. As shown in FIG. 6, the valve seat 311 of the one-way valve 30 may be welded to the end cover 21. Specifically, the valve cover 312 of the one-way valve 30 is connected to the valve seat 311, and the valve seat 311 is welded to the end cover 21. In other embodiments, when the embodiment shown in FIG. 11 is adopted for the one-way valve 30, the valve seat 311 of the one-way valve 30 may be connected to the valve cover 312, and the valve cover 312 is welded to the end cover 21.

According to some embodiments of this application, a stress relief groove is provided around a weld mark between the valve cover 312/valve seat 311 and the end cover 21. The stress relief groove may be provided on only the end cover 21, or the stress relief groove may be provided on only the valve cover 312/valve seat 311, or the stress relief groove may be provided on both the end cover 21 and the valve cover 312/valve seat 311. Optionally, a side surface of the valve seat 311/valve cover 312 facing the outside of the housing is provided with the first stress relief groove; and/or a side surface of the wall portion facing the outside of the housing is provided with a second stress relief groove.

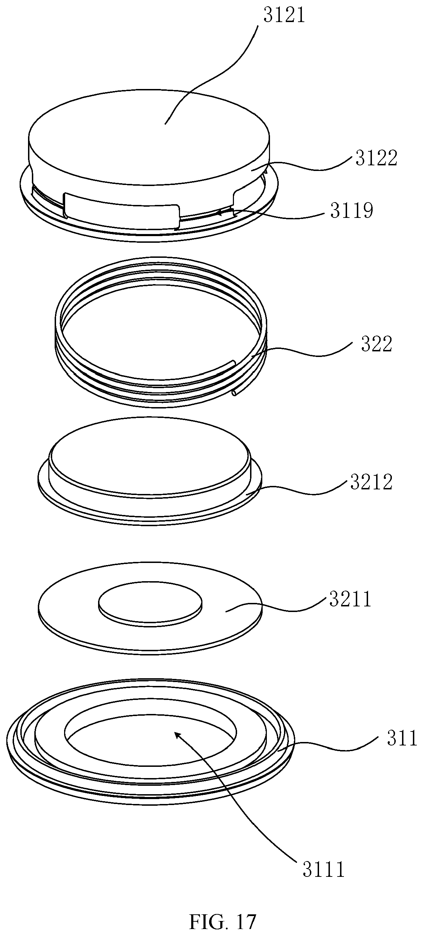

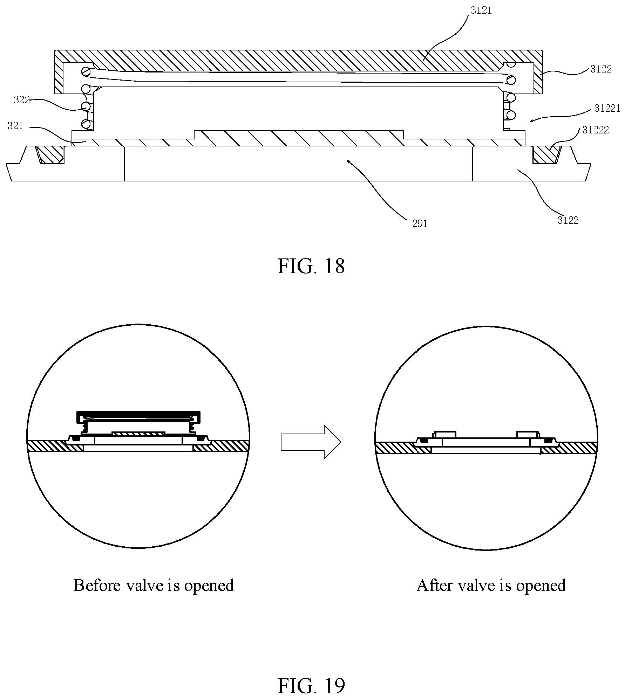

Reference is made to FIG. 16, FIG. 17, FIG. 18, and FIG. 19 in combination, where FIG. 16 is a front view of a one-way valve 30 according to one or more embodiments, FIG. 17 is a schematic diagram of an exploded structure of a one-way valve 30 according to one or more embodiments, FIG. 18 is a schematic diagram of a cross-sectional structure of a one-way valve 30 according to one or more embodiments, and FIG. 19 is a schematic diagram of a state of a one-way valve 30 according to one or more embodiments.

In these embodiments, the valve body 31 of the one-way valve 30 is provided with a weak-strength zone 3119. By providing the weak-strength zone 3119, when the internal pressure of the battery cell 20 is too high, the valve body 31 can be fractured at the weak-strength zone 3119 to relieve the pressure of the battery cell 20 in time.

As shown in FIG. 19, before the valve is opened, the valve body 31 of the one-way valve 30 is intact, and the valve core 32 seals the air inlet 313a under the action of pressure, presenting a sealed state. After the valve is opened, part of the valve body 31 of the one-way valve 30 is flushed open, the sealing interface becomes ineffective, to relieve the pressure inside the battery cell 20.

In an embodiment, the weak-strength zone 3119 includes a small-thickness zone. To be specific, this zone is thinner than other zones of the valve body 31, and the strength is reduced by reducing the thickness. In other embodiments, the weak-strength zone 3119 may alternatively be constructed by using materials with different strengths. For example, some materials with low strength are selected to form the weak-strength zone 3119.

In an embodiment, the valve body 31 includes a valve cover 312. The valve cover 312 includes a cover top wall 3121 and a cover side wall 3122 connected to the cover top wall 3121. The small-thickness zone 3119 includes a groove provided on the cover side wall 3122. The provision of the groove on the cover side wall 3122 can reduce a thickness of the cover side wall 3122 in a zone where the groove is located, thereby achieving a small thickness.

In an embodiment, the groove is located on a side of the cover side wall 3122 facing the valve cavity 313; or the groove is located on a side of the cover side wall 3122 away from the valve cavity 313. In other words, both the inner and outer sides of the cover side wall 3122 may be provided with the groove. Orthographic projections of the grooves on the two sides on the cover side wall 3122 at least partially overlap. Through such arrangement, the thickness of the cover side wall 3122 can be thinned from the two sides, and the thickness of a position of the cover side wall 3122 where the groove is provided is reduced, achieving a small thickness, and thus resulting in easier fracture under pressure.

In an embodiment, the cover side wall 3122 has a second through hole 31221 extending through the cover side wall 3122, and the groove is provided on a connecting arm between adjacent two of the second through holes 31221. The second through hole 31221 may be provided in plurality, and the plurality of second through holes 31221 are spaced apart in the circumferential direction of the cover side wall 3122. The provision of the second through holes 31221 may cause missing of part of an entity of the cover side wall 3122, which reduces the strength of the cover side wall 3122 to some extent. On this basis, the provision of a small-thickness zone results in easier fracture under pressure.

The groove may be provided on the connecting arm between two adjacent second through holes 31221. The groove can extend along a circumferential direction of the valve cover 312 and can extend to two ends of the connecting arm. As shown in FIG. 16, the small-thickness zone is a groove extending in the circumferential direction of the cover side wall 3122.

In an embodiment, the small-thickness zone includes a first score groove, where the first score groove is a circumferential groove surrounding the cover side wall 3122.

As shown in FIG. 16, due to the provision of the second through holes 31221, in an axial direction Y of the valve cavity 313, the cover side wall 3122 includes an entity zone 3122a and an exhaust zone 3122b. In a circumferential direction of the valve cavity 313, the cover side wall 3122 at the exhaust zone 3122b is provided with a second through hole 31221, where the cover side wall 3122 is discontinuous, while the cover side wall 3122 at the entity zone 3122a is a continuous entity structure. Therefore, the cover side wall 3122 at the entity zone 3122a may alternatively be provided with the small-thickness zone. Specifically, the small-thickness zone includes a first score groove, where the first score groove is a circumferential groove on the cover side wall 3122.

In other embodiments, in the circumferential direction of the cover side wall 3122, the groove may alternatively be discontinuous. Specifically, the small-thickness zone includes a plurality of second score grooves, where the plurality of second score grooves are spaced apart in the circumferential direction of the cover side wall 3122. That is, the cover side wall 3122 at the entity zone 3122a may alternatively be provided with a plurality of discontinuous grooves.

Reference is made to FIG. 5, FIG. 8, and FIG. 16 in combination. The one-way valve 30 in this application may include no weak-strength zone 3119, or may include the weak-strength zone 3119, which may be selected according to needs. In some embodiments, one battery cell 20 may be provided with both the two types of one-way valves 30.

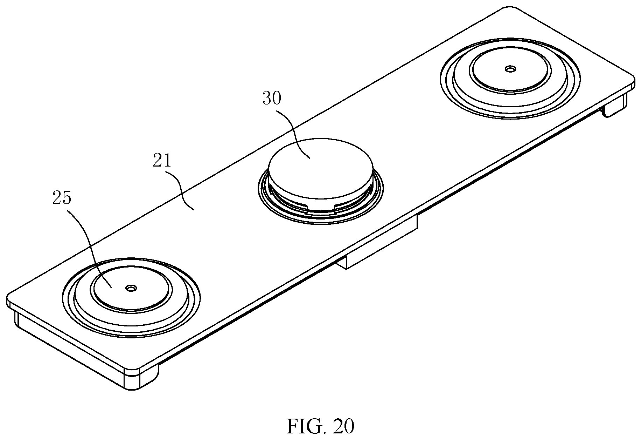

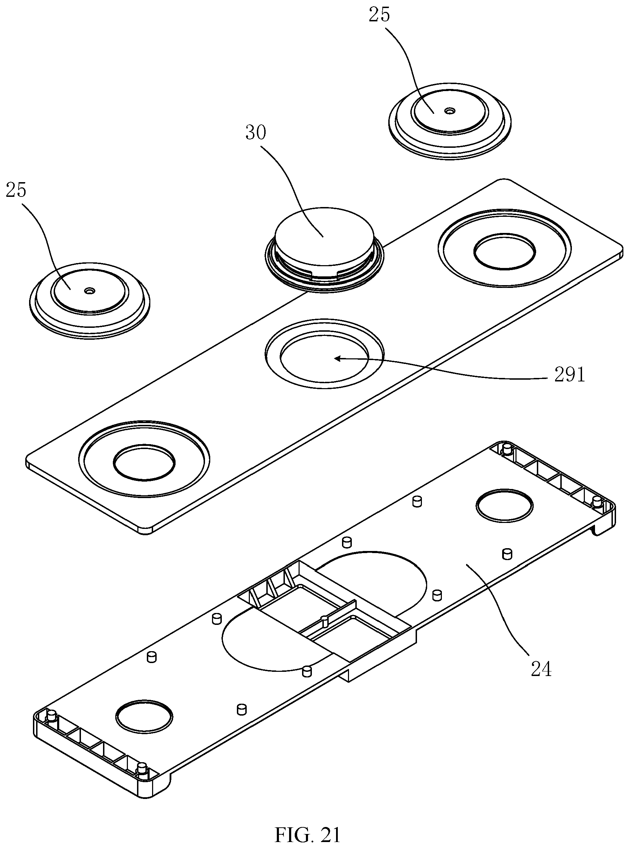

Reference is made to FIG. 20 and FIG. 21 in combination, where FIG. 20 is a front view of an end cover 21 of a battery cell 20 according to one or more embodiments, and FIG. 21 is a schematic diagram of a partial exploded structure of a battery cell 20 according to one or more embodiments. The one-way valve 30 with the weak-strength zone 3119 achieves a pressure relief effect to some extent. Therefore, when this type of one-way valve 30 is used, the battery cell 20 may be provided with no pressure relief mechanism 70. Certainly, when the one-way valve 30 with the weak-strength zone 3119 is used, the battery cell 20 may alternatively be provided with the pressure relief mechanism 70. When the valve body 31 is provided with the weak-strength zone 3119, an actuation pressure of the pressure relief mechanism 70 is greater than an actuation pressure of the weak-strength zone 3119, and the actuation pressure of the weak-strength zone 3119 is greater than the opening pressure of the one-way valve 30. Through such arrangement, when the battery cell 20 undergoes thermal runaway, the gas inside the housing of the battery cell 20 increases rapidly to open the pressure relief mechanism 70 for pressure relief, and when the pressure of gas generated inside the housing 21 of the battery cell 20 during normal use reaches a threshold, the one-way valve 30 can be opened, but the pressure relief mechanism 70 cannot be opened. Further, during thermal runaway, before the pressure relief mechanism 70 is opened, the one-way valve 30 may be destroyed at the weak-strength zone 3119 to perform a specific degree of pressure relief. If the internal air pressure of the battery cell 20 still increases, the pressure relief mechanism 70 is then opened.

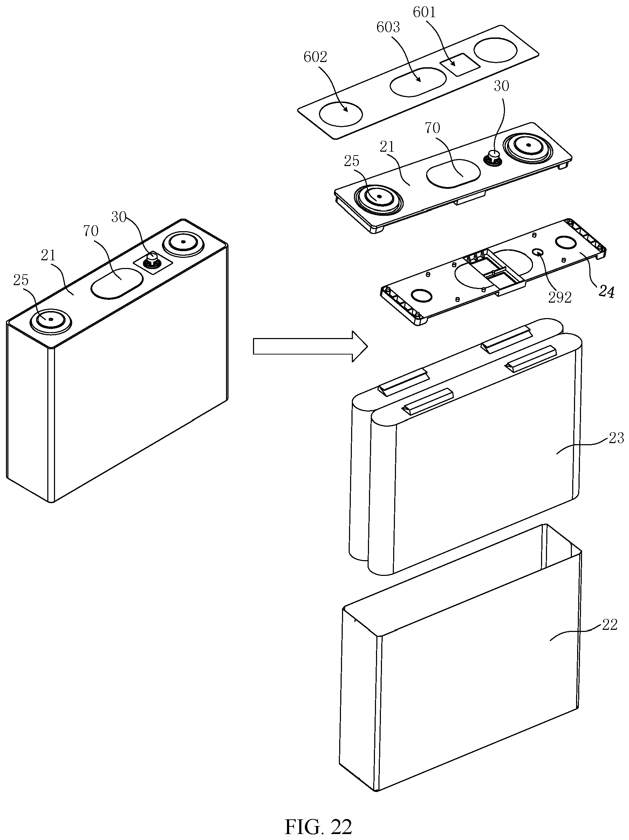

Reference is made to FIG. 22, where FIG. 22 is a schematic diagram of an exploded structure of a battery cell 20 according to one or more embodiments. According to some embodiments of this application, the battery cell 20 further includes a protective patch 60. The protective patch 60 is arranged on the side of the end cover 21 facing the outside of the housing. That is, the protective patch 60 is arranged on the outer surface 21a of the end cover 21 to protect the end cover 21 to some extent. The protective patch 60 may be made of various materials, such as rubber, silicone, or plastic.

According to some embodiments of this application, the protective patch 60 is provided with a first avoidance hole 601 extending through the protective patch 60. The first avoidance hole 601 is used for the one-way valve 30 to pass through.

According to some embodiments of this application, in an embodiment where the end cover 21 is provided with an electrode terminal 25, as shown in FIG. 22, the protective patch 60 is provided with a second avoidance hole 602 at a position corresponding to the electrode terminal 25. The second avoidance hole 602 extends through two sides of the protective patch 60. The second avoidance hole 602 is used for the electrode terminal 25 to pass through to avoid the electrode terminal 25. Exemplarily, the end cover 21 is provided with two electrode terminals 25. Correspondingly, the protective patch 60 is provided with two second avoidance holes 602, where each second avoidance hole 602 is used for one electrode terminal 25 to pass through.

In an embodiment where the end cover 21 is provided with a pressure relief mechanism 70, as shown in FIG. 22, the protective patch 60 is provided with a third avoidance hole 603 at a position corresponding to the pressure relief mechanism 70. The third avoidance hole 603 extends through two sides of the protective patch 60. An orthographic projection of the pressure relief mechanism 70 on the protective patch 60 is located in the third avoidance hole 603, so that the third avoidance hole 603 can avoid the pressure relief mechanism 70.

According to some embodiments of this application, the protective patch 60 is provided with an information collection hole (not shown in the figure) extending through the protective patch 60. The information collection hole is used for exposing part of the end cover 21, so as to facilitate provision of an information code on the end cover 21 or connection to a detection element for sampling.

According to some embodiments of this application, the protective patch 60 may be arranged on the end cover 21 in various structures. The protective patch 60 may be arranged on the end cover 21 by methods such as bonding and adsorption.

Reference is still made to FIG. 22. According to some embodiments of this application, the battery cell 20 further includes an insulating member 24. The insulating member 24 is arranged on a side of the end cover 21 facing the inside of the housing. To be specific, an inner side of the end cover 21 may be further provided with the insulating member 24. The insulating member 24 may be used to isolate electrical connection components in the shell 22 from the end cover 21, to reduce the risk of short circuits. Exemplarily, the insulating member 24 may be made of plastic, rubber, or the like.

The insulating member 24 is made of a material that does not form a short circuit due to contact with the electrode assembly 23 inside the battery 100. The insulating member 24 is used to protect the end cover 21 from being directly exposed outside the electrode assembly 23 in a height direction, so as to prevent formation of a short circuit due to contact with the electrode assembly 23.

The insulating member 24 is provided with a second exhaust hole 292 extending through the insulating member 24, so that the gas inside the battery 100 enters a zone of the one-way valve 30 through the first exhaust hole 291. Further, the second exhaust hole 292 is in communication with the first exhaust hole 291 to enable smoother gas exhaust.

According to some embodiments of this application, as shown in FIG. 22, the battery cell 20 further includes a pressure relief mechanism 70. The pressure relief mechanism 70 is arranged on the housing. The pressure relief mechanism 70 is configured to actuate and relieve the internal pressure of the battery cell 20 upon thermal runaway of the battery cell 20.

The pressure relief mechanism 70 is arranged on the housing, which may be arranged on the end cover 21 or on the shell 22. Exemplarily, in FIG. 1, the pressure relief mechanism 70 is arranged on the end cover 21.

The pressure relief mechanism 70 is configured to actuate and relieve the internal pressure of the battery cell 20 upon thermal runaway of the battery cell 20. To be specific, when thermal runaway occurs inside the battery cell 20, the pressure relief mechanism 70 can actuate and open to relieve gas generated by the thermal runaway inside the battery cell 20 and the like. It should be noted that when the battery cell 20 undergoes thermal runaway, the gas inside the housing of the battery cell 20 increases rapidly to open the pressure relief mechanism 70 for pressure relief, while gas generated inside the housing during normal use of the battery cell 20 can be discharged through the one-way valve 30, but the pressure relief mechanism 70 cannot be opened.

Optionally, the pressure relief mechanism 70 and the housing may be an integrally formed structure or separately arranged structures. If the pressure relief mechanism 70 and the housing are an integrally formed structure, the pressure relief mechanism 70 is a zone on the housing with a weak structure, such as a zone on the housing with a score groove; and if the pressure relief mechanism 70 and the housing are separately arranged structures, the pressure relief mechanism 70 may be connected to the housing by welding, hot melting, injection molding, or bonding. Exemplarily, in FIG. 15, the pressure relief mechanism 70 and the housing are separately arranged structures, and the pressure relief mechanism 70 is arranged on the end cover 21 of the housing. The pressure relief mechanism 70 may be a pressure relief component such as an explosion-proof valve, an explosion-proof sheet, a pressure relief valve, or a safety valve.

Exemplarily, in FIG. 1, both the electrode terminal 25 and the pressure relief mechanism 70 are arranged on the end cover 21. The battery cell 20 with this structure can reduce space occupied by the battery cell 20. Certainly, in other embodiments, the electrode terminal 25 and the pressure relief mechanism 70 may alternatively be arranged on different walls of the housing. The battery cell 20 with this structure enables the electrode terminal 25 used for outputting or inputting electrical energy of the battery cell 20 and the pressure relief mechanism 70 used for relieving internal pressure to leave away from each other, to reduce the risk of the battery cell 20 in use. For example, the pressure relief mechanism 70 is arranged on the shell 22, and the electrode terminal 25 is arranged on the end cover 21.

By the arrangement of the one-way valve 30, when gas is generated inside the housing during normal use of the battery cell 20, the gas can be discharged to the outside of the housing through the one-way valve 30, to alleviate the phenomenon that the pressure relief mechanism 70 prematurely actuates and relieves pressure before the thermal runaway of the battery cell 20 due to an increase in the internal air pressure of the battery cell 20, effectively improving the use stability of the battery cell 20, thereby extending the service life and improving the use reliability of the battery cell 20.

In some embodiments, the one-way valve 30 and the pressure relief mechanism 70 may be arranged on a same wall of the housing. For example, both the one-way valve 30 and the pressure relief mechanism 70 are arranged on the end cover 21. The battery cell 20 with this structure helps to reduce space occupied by the battery cell 20, so as to increase the energy density of the battery cell 20.

In some embodiments, the one-way valve 30 and the pressure relief mechanism 70 may be arranged on different walls of the housing. For example, the one-way valve 30 is arranged on the shell 22, and the pressure relief mechanism 70 is arranged on the end cover 21. The battery cell 20 with this structure can reduce the mutual influence between the one-way valve 30 and the pressure relief mechanism 70, and is applicable to different use environments. It is preferred that the one-way valve 30 and the pressure relief mechanism 70 are arranged on a wall at a top when the battery 100 is placed, so as to facilitate gas discharge.

In some embodiments, the actuation pressure of the pressure relief mechanism 70 is greater than the opening pressure of the one-way valve 30, that is, a pressure at which the gas inside the housing opens the pressure relief mechanism 70 is greater than a pressure at which the gas inside the housing opens the one-way valve 30. When the battery cell 20 undergoes thermal runaway, the gas inside the housing of the battery cell 20 increases rapidly to open the pressure relief mechanism 70 for pressure relief. Whereas, when the pressure of gas generated inside the housing 21 of the battery cell 20 during normal use reaches a threshold, the one-way valve 30 can be opened, but the pressure relief mechanism 70 cannot be opened.

In some embodiments, an exhaust rate of the one-way valve 30 is less than an exhaust rate of the pressure relief mechanism 70.

By setting the exhaust rate of the one-way valve 30 to be less than the exhaust rate of the pressure relief mechanism 70, when the battery cell 20 undergoes thermal runaway, the phenomenon that the pressure relief mechanism 70 fails to actuate and open due to too fast gas exhaust of the one-way valve 30 can be alleviated, so that the pressure relief mechanism 70 can actuate and stably relieve the internal pressure of the battery cell 20 upon thermal runaway of the battery cell 20, which achieves easier pressure relieve, thereby helping to reduce the risks such as fire and explosion of the battery cell 20 during thermal runaway.

The end cover 21 is provided with a pressure relief hole 701, where the pressure relief hole 701 is in communication with the pressure relief mechanism 70. An aperture of the pressure relief hole 701 may be greater than an aperture of the first exhaust hole 291 that is in communication with the one-way valve 30, so that the exhaust rate of the pressure relief mechanism 70 is greater than the exhaust rate of the one-way valve 30.

Thus, when the battery cell 20 undergoes thermal runaway, the phenomenon that the pressure relief mechanism 70 fails to actuate and open due to too fast gas exhaust of the one-way valve 30 can be alleviated, so that the pressure relief mechanism 70 can actuate and stably relieve the internal pressure of the battery cell 20 upon thermal runaway of the battery cell 20, thereby helping to reduce the risks such as fire and explosion of the battery cell 20 during thermal runaway. In addition, airtightness of the system is also considered, to prevent deterioration of the airtightness of the system due to an excessively large exhaust rate, and thus the airtightness of the system of the battery 100 is maintained while the gas is discharged.

In some embodiments, the end cover 21 is provided with an electrolyte injection hole, and the first exhaust hole 291 to be installed with the one-way valve 30 may be the electrolyte injection hole. To be specific, after the battery cell 20 completes electrolyte injection, the one-way valve 30 is installed on the electrolyte injection hole, and the one-way valve 30 is used to replace an original electrolyte injection hole sealing structure. The first exhaust hole 291 to be installed with the one-way valve 30 is configured as the electrolyte injection hole, an electrolyte can be injected into the housing through the first exhaust hole 291 before the one-way valve 30 is installed in the first exhaust hole 29128, so that there is no need to separately provide an electrolyte injection hole on the housing, helping to improve the production efficiency of the battery cell 20 and helping to reduce manufacturing costs of the battery cell 20. Alternatively, the first exhaust hole 291 and the electrolyte injection hole may be spaced apart.

In some embodiments, the battery cell 20 is an alkali metal battery 100, for example, may be a sodium metal battery 100, a lithium metal battery 100, or a magnesium metal battery 100. The alkali metal battery 100 is used in cooperation with an exhaust assembly, so that gas generated in the alkali metal battery 100 during normal operation can be discharged in time, extending the service life of the alkali metal battery 100.

The electrode assembly 23 is mainly formed by winding or stacking a positive electrode sheet and a negative electrode sheet, and a separator is usually arranged between the positive electrode sheet and the negative electrode sheet. Parts of the positive electrode sheet and the negative electrode sheet that have active materials constitute a main body of the electrode assembly 23, and parts of the positive electrode sheet and the negative electrode sheet that do not have active materials respectively constitute tabs. A positive tab and a negative tab may be together located at one end of the main body or respectively located at two ends of the main body. During charging and discharging of the battery 100, a positive electrode active material and a negative electrode active material react with an electrolyte, and the tabs are connected to the electrode terminals 25 to form a current loop.

In an embodiment, the positive electrode sheet includes a positive electrode current collector and a positive electrode active layer arranged on at least one side of the positive electrode current collector, where the positive electrode active layer includes a positive electrode active material.

In an example, the positive electrode current collector has two opposite surfaces in its thickness direction, and the positive electrode active layer may be arranged on either or both of the two opposite surfaces of the positive electrode current collector.

In an embodiment, the positive electrode current collector may be a metal foil or a composite current collector. For example, aluminum foil can be used as the metal foil. The composite current collector may include a polymer material substrate and a metal layer formed on at least one surface of the polymer material substrate. The composite current collector may be formed by forming a metal material (aluminum, aluminum alloy, nickel, nickel alloy, titanium, titanium alloy, silver, silver alloy, and the like) on a polymer material substrate (such as a substrate of polypropylene (PP), polyethylene terephthalate (PET), polybutylene terephthalate (PBT), polystyrene (PS), or polyethylene (PE)).

In an embodiment, the positive electrode material includes one or more of a polyanionic positive electrode material, a phosphate positive electrode material, a sulfate positive electrode material, a silicate positive electrode material, and a borate positive electrode material. For example, in the positive electrode active material of a sodium battery 100, a polyanionic compound includes compounds based on phosphoric acid and fluorophosphoric acid. Compounds based on phosphoric acid include Nax1Fey1Pm1On1, for example, sodium iron phosphate with a high capacity and sodium iron pyrophosphate with a high voltage platform. The polyanionic compound includes one or more of sodium vanadium trifluorophosphate Na3V2(PO4)2F3, sodium vanadium fluorophosphate NaVPO4F, sodium vanadium phosphate Na3V2(PO4)3, Na4Fe3(PO4)2P2O7, NaFePO4, and Na3V2(PO4)3. The Prussian blue compound is NaxMM(CN)6, where M and M are one or more of Fe, Mn, Co, Ni, Cu, Zn, Cr, Ti, V, Zr, and Ce, where 0 < x ≤ 2. The positive electrode active material in a lithium metal battery 100 may include at least one of nickel cobalt manganese lithium, nickel cobalt aluminum lithium, lithium iron phosphate, lithium cobalt oxide, lithium manganese oxide, or lithium manganese iron phosphate.

In an embodiment, the negative electrode sheet includes a negative electrode current collector and a negative electrode active layer arranged on at least one surface of the negative electrode current collector, where the negative electrode active layer includes a negative electrode active material. In this embodiment, the battery cell 20 is an ion battery 100. During charging and discharging of the battery 100, active ions (such as Li+ and Na+) are intercalated/deintercalated in the negative electrode active material.

In an example, the negative electrode current collector has two opposite surfaces in its thickness direction, and the negative electrode active layer may be arranged on either or both of the two opposite surfaces of the negative electrode current collector.

In an embodiment, the negative electrode current collector may be a metal foil or a composite current collector. For example, copper foil can be used as the metal foil. The composite current collector may include a polymer material substrate and a metal layer formed on at least one surface of the polymer material substrate. The composite current collector may be obtained by forming a metal material (copper, copper alloy, nickel, nickel alloy, titanium, titanium alloy, silver, silver alloy, and the like) on a polymer material substrate (such as a substrate of polypropylene (PP), polyethylene terephthalate (PET), polybutylene terephthalate (PBT), polystyrene (PS), or polyethylene (PE)).

In an embodiment, the negative electrode active material may include one or more of a silicon-based material, a silicon-carbon material, a carbon material, and a selenium-based material, specifically including one or more of artificial graphite, natural graphite, hard carbon, soft carbon, a silicon-based material, and a selenium-based material. The silicon-based material may be one or more selected from elemental silicon, silicon oxide (such as silicon suboxide), a silicon-carbon composite, a silicon-nitrogen composite, and silicon alloy. The selenium-based material may be one or more selected from elemental selenium, selenium oxide, and selenium alloy.

In an embodiment, the negative electrode sheet includes a negative electrode current collector and a carbon-containing coating arranged on at least one surface of the negative electrode current collector. In this embodiment, the battery cell 20 is a metal battery 100. During charging and discharging of the battery 100, active ions are deposited/stripped at the negative electrode sheet. The metal battery 100 may be an alkali metal battery 100, such as one of a lithium metal battery 100, a sodium metal battery 100, a potassium metal battery 100, a zinc metal battery 100, and an aluminum metal battery 100. This type of battery 100 may also be referred to as a "negative-electrode-free battery 100". During charging, active ions (such as Na+) deintercalated from the positive electrode active material are deposited on the negative electrode current collector to form sodium metal. The arrangement of the carbon-containing coating facilitates more uniform metal deposition. The carbon-containing material includes one or more of conductive carbon, graphite, hard carbon, and carbon nanotubes.

In some other embodiments, a conductive film layer may be deposited on the negative electrode current collector, for example, an alloy material, a titanium-based material, an active metal (such as sodium metal), a carbon-based material with a metal deposited, a composite material containing a metal, or an alloy material containing a metal. The above alloy material includes but is not limited to sodium-tin alloy, sodium-germanium alloy, and sodium-antimony alloy. The above titanium-based material includes but is not limited to titanium dioxide, titanate, and titanium phosphate.

In an embodiment, the positive electrode active layer and the negative electrode active layer may each further include a binder and a conductive agent. In an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylate resin. In an example, the conductive agent may include at least one of superconducting carbon, acetylene black, carbon black, Ketjen black, carbon dots, carbon nanotubes, graphene, and carbon nanofiber.

In an embodiment, any well-known porous separator with good chemical stability and mechanical stability may be used as the separator.

In an embodiment, a material of the separator may be at least one selected from glass fiber, non-woven fabric, polyethylene, polypropylene, and polyvinylidene fluoride. The separator may be a single-layer film or a multi-layer composite film, without particular limitation. When the separator is a multi-layer composite film, the materials of the layers may be the same or different, without particular limitation.

The electrolyte plays a role in conducting ions between the positive electrode sheet and the negative electrode sheet. The electrolyte may be liquid, gel, or full-solid.

In some embodiments, the electrolyte is an electrolyte solution. The electrolyte solution includes an electrolytic salt and a solvent. After the electrolytic salt is dissolved, electrolyte ions are formed, and conduction is achieved by movement of the electrolyte ions in the electrolytic salt.

In an embodiment, in the sodium battery 100, the electrolytic salt includes sodium salts such as sodium hexafluorophosphate (NaPF6), sodium bis(fluorosulfonyl)imide (NaFSI), sodium trifluoromethanesulfonate (CF3NaO3S), and sodium sulfide (Na2S). The lithium battery 100 includes at least one lithium salt of lithium perchlorate, lithium hexafluoroarsenate, lithium hexafluorophosphate, lithium bis(trifluoromethanesulfonyl)imide, lithium bis(fluorosulfonyl)imide, lithium difluorooxalate borate, lithium tetrafluoroborate, and lithium trifluoromethanesulfonate.

In an embodiment, the solvent includes one or more solvents of chain ether, ethylene glycol dimethyl ether and its derivatives, diethylene glycol dimethyl ether, triethylene glycol dimethyl ether, tetraethylene glycol dimethyl ether, and cyclic ether, specifically including dimethyl ether (DME), diethylene glycol diethyl ether, tetraethylene glycol dimethyl ether, 2,2,2,2-trifluoroethyl ether, ethylene glycol diethyl ether, triethylene glycol dimethyl ether, ethylene glycol dimethyl ether derivatives, methyl trifluoroethyl carbonate (FEMC), dioxolane (DOL), acetonitrile (AN), fluorobenzene, triethyl phosphate (TEP), sulfolane, 2-methyltetrahydrofuran, tetrahydrofuran, dimethyl sulfoxide, N,N-dimethylacetamide, and the like.

In an embodiment, the electrolyte solution may further include additives. For example, the additives may include a negative electrode film-forming additive and a positive electrode film-forming additive, and may further include additives that can improve certain performance of the battery 100, such as additives that improve the overcharge performance of the battery 100, and additives that improve the high-temperature or low-temperature performance of the battery 100.

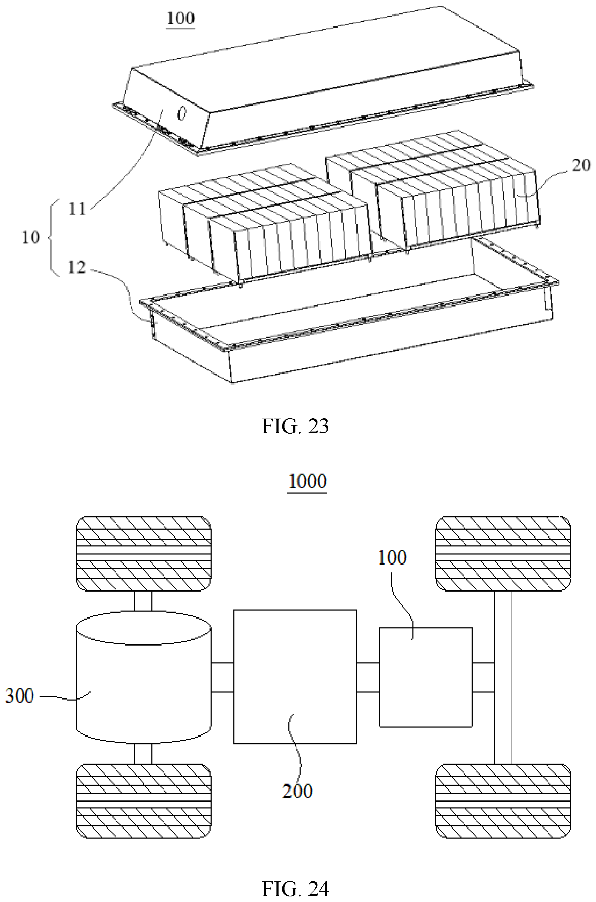

According to some embodiments of this application, this application further provides a battery 100. The battery 100 includes the battery cell 20 of any of the above solutions. Reference is made to FIG. 23, where FIG. 23 is a schematic diagram of an exploded structure of a battery 100 according to one or more embodiments. The battery 100 includes a box 10 and a battery cell 20. The battery cell 20 is accommodated in the box 10. The box 10 is used to provide an accommodating space for the battery cell 20. The box 10 may be various structures. In some embodiments, the box 10 may include a first part 11 and a second part 12. The first part 11 and the second part 12 cover each other. The first part 11 and the second part 12 jointly define an accommodating space for accommodating the battery cell 20. The second part 12 may be a hollow structure with one end open, the first part 11 may be a plate-like structure, and the first part 11 covers an open side of the second part 12 so that the first part 11 and the second part 12 jointly define the accommodating space. The first part 11 and the second part 12 may alternatively each be a hollow structure with one side open, and the open side of the first part 11 covers the open side of the second part 12. Certainly, the box 10 formed by the first part 11 and the second part 12 may have various shapes, for example, being a cylinder or a cuboid.

In the battery 100, the battery cell 20 may be provided in plurality, and the plurality of battery cells 20 may be connected in series, in parallel, or in series-parallel. Being connected in series-parallel means that there are both a series connection and a parallel connection between the plurality of battery cells 20. The plurality of battery cells 20 may be directly connected in series, in parallel, or in series-parallel, and then an entirety formed by the plurality of battery cells 20 is accommodated in the box 10. Certainly, the battery 100 may alternatively be formed in a manner that a plurality of battery cells 20 are first connected in series, in parallel, or in series-parallel to form a battery 100 module, and then a plurality of battery 100 modules are connected in series, in parallel, or in series-parallel to form an entirety that is accommodated in the box 10. The battery 100 may further include other structures. For example, the battery 100 may further include a busbar component for realizing electrical connection between a plurality of battery cells 20.

Each battery cell 20 may be a secondary battery 100 or a primary battery 100. Specific examples thereof include all types of primary batteries 100 or secondary batteries 100. For example, the battery cells 20 may be different types of secondary batteries 100 such as lithium batteries 100, sodium batteries 100, and potassium batteries 100. Lithium secondary batteries 100 may include lithium metal secondary batteries 100, lithium-ion secondary batteries 100, lithium polymer secondary batteries 100, or lithium-ion polymer secondary batteries 100. The battery cells may alternatively be lithium-sulfur batteries 100, sodium-ion batteries 100, or magnesium-ion batteries 100, but are not limited thereto. The battery cell 20 may be in the shape of a cylinder, a flat body, or a cuboid, or in other shapes.

In some embodiments, the battery 100 may be an energy storage apparatus. Energy storage apparatuses include energy storage containers, energy storage cabinets, and the like.

According to some embodiments of this application, this application further provides an electric device. The electric device includes the battery cell 20 of any of the above solutions, and the battery cell 20 is used to provide electrical energy for the electric device. The electric device may be any device or system that uses the battery cells 20.

In some embodiments, the use of the electric device of this application is not particularly limited, and it may be used in any electronic apparatus known in the prior art. The battery 100 disclosed in the embodiments of this application can be used in electric devices that use the battery 100 as a power source or in various energy storage systems that use the battery 100 as an energy storage element. To be specific, an electric device is provided, and in some embodiments, the electric device of this application may be used in, but not limited to, notebook computers, pen-input computers, mobile computers, e-book players, portable phones, portable fax machines, portable copiers, portable printers, head-mounted stereo headphones, video recorders, LCD televisions, portable cleaners, portable CD players, mini discs, transceivers, electronic notebooks, calculators, memory cards, portable tape recorders, radios, backup power supplies, motors, automobiles, motorcycles, power-assisted bicycles, bicycles, ships, spacecraft, lighting fixtures, toys, game consoles, clocks, power tools, flashlights, cameras, large-size household batteries 100, and lithium-ion capacitors.

A battery cell 20, a battery 100 module, or a battery 100 pack may be selected for the electric device according to the use requirements of the electric device.

Reference is made to FIG. 24, where FIG. 24 is a schematic structural diagram of a vehicle 1000 according to one or more embodiments. The vehicle 1000 may be a fuel vehicle, a gas vehicle, or a new energy vehicle. The new energy vehicle may be a traction electric vehicle, a hybrid vehicle, an extended-range vehicle, or the like. The vehicle 1000 is provided with a battery 100 inside. The battery 100 may be arranged at the bottom, front, or rear of the vehicle 1000. The battery 100 may be used to supply power to the vehicle 1000. For example, the battery 100 may be used as an operating power source for the vehicle 1000. The vehicle 1000 may further include a controller 200 and a motor 300. The controller 200 is used to control the battery 100 to supply power to the motor 300, for example, to meet the operating power demands for starting, navigation, and driving of the vehicle 1000.

In some embodiments of this application, the battery 100 can be used not only as an operating power source for the vehicle 1000, but also as a driving power source for the vehicle 1000, replacing or partially replacing fuel or natural gas to provide driving power for the vehicle 1000.

In the above embodiments, by the arrangement of the one-way valve 30, the gas inside the housing of the battery 100 can be discharged to the outside of the housing in time, so that the air pressure inside the housing of the battery 100 is not too high, reducing the risk of the valve of the pressure relief mechanism 70 being opened prematurely, and greatly extending the service life of the battery 100. One battery cell 20 may be provided with one or more one-way valves 30, where arrangement positions and methods of the one-way valves 30 may be different. For example, one one-way valve 30 is arranged on a side of the end cover 21 facing the inside of the housing of the battery 100, and another one-way valve 30 is arranged on a side of the end cover 21 facing the outside of the housing of the battery 100. One one-way valve 30 may be arranged on the end cover 21, and another one-way valve 30 may be arranged on the shell 22.

The above descriptions are only embodiments of this application, and do not therefore limit the patent scope of this application. Any equivalent structure or equivalent process transformation made by using the content of the specification and drawings of this application or directly or indirectly applied in other related technical fields shall be included in the patent protection scope of this application in the same way.

## Claims

1. A battery cell, **characterized by** comprising:
a housing, having a wall portion, wherein the wall portion has a first exhaust hole, and the first exhaust hole enables communication between the inside of the housing and the outside of the housing; and
a one-way valve, comprising a valve body and a valve core, wherein the valve body has a valve cavity inside; the valve body is provided with an air inlet and an air outlet; the air inlet enables communication between the valve cavity and the inside of the housing; the air outlet enables communication between the valve cavity and the outside of the housing; the valve core is arranged in the valve cavity; the valve core is used to seal the air inlet; the valve core is configured to open the air inlet under the action of gas inside the housing and release gas inside the battery cell; the wall portion has an outer surface and an inner surface arranged back to back; the outer surface faces the outside of the housing; the inner surface faces the inside of the housing; the valve body is arranged on the outer surface; and at least part of the valve body protrudes from the outer surface.

2. The battery cell according to claim 1, **characterized in that** the valve body comprises:
a valve seat; and
a valve cover, comprising a cover top wall and a cover side wall connected to the cover top wall, wherein the cover top wall, the cover side wall, and the valve seat enclose the valve cavity; the valve seat is provided with the air inlet of the valve cavity; the valve cover is provided with the air outlet; the valve seat has a first through hole extending through the valve seat; and the air inlet is the first through hole.

3. The battery cell according to claim 2, **characterized in that**
the cover side wall has a second through hole extending through the cover side wall, and the air outlet is the second through hole.

4. The battery cell according to claim 3, **characterized in that**
along a direction facing away from the cover top wall, the second through hole extends to an end portion of the cover side wall; and
optionally, the second through hole is provided in plurality, and the plurality of the second through holes are spaced apart in a circumferential direction of the cover side wall.

5. The battery cell according to any one of claims 2 to 4, **characterized in that**
a first guide post protrudes from a side of the cover top wall facing the valve cavity, and the cover top wall has a third through hole extending through the cover top wall and the first guide post; or the cover top wall has a third through hole extending through the cover top wall, and the air outlet is the third through hole.

6. The battery cell according to any one of claims 2 to 5, **characterized in that**
the valve cover further comprises a flanged wall, the cover side wall connects the cover top wall and the flanged wall, the flanged wall extends relative to the cover side wall toward a side away from the valve cavity, and the flanged wall is connected to the valve seat.

7. The battery cell according to claim 6, **characterized in that**
a side of the valve seat facing the valve cover is provided with a first sinking groove recessed relative to a surface of the valve seat, and at least part of the flanged wall is accommodated in the first sinking groove and connected to the valve seat.

8. The battery cell according to claim 7, **characterized in that**
the side of the valve seat facing the valve cover is provided with a first step surface and a second step surface, wherein the first step surface is closer to the valve cover than the second step surface, and the first sinking groove is provided on the first step surface.

9. The battery cell according to claim 7 or 8, **characterized in that**
a surface of the flanged wall facing the cover top wall is flush with a surface of the valve seat facing the valve cover; or the surface of the flanged wall facing the cover top wall is lower than the surface of the valve seat facing the valve cover.

10. The battery cell according to any one of claims 7 to 9, **characterized in that**
the flanged wall is welded to the valve seat; wherein in a circumferential direction of the cover side wall, at least part of a first weld mark between the flanged wall and the valve seat is staggered from the second through hole in the cover side wall.

11. The battery cell according to claim 6, **characterized in that**
a connecting protrusion protrudes from an outer circumferential surface of the valve seat, an inner circumferential surface of the flanged wall is provided with an accommodating groove, and the connecting protrusion is accommodated in the accommodating groove and connected to the flanged wall.

12. The battery cell according to claim 11, **characterized in that**
the connecting protrusion is welded to the flanged wall, wherein the flanged wall has an upper surface and a lower surface arranged back to back, the upper surface faces the cover top wall, and a second weld mark formed by welding of the connecting protrusion and the flanged wall is located on the lower surface of the flanged wall.

13. The battery cell according to claim 1, **characterized in that**
the valve body comprises a valve cover, wherein the valve cover comprises a cover top wall and a cover side wall connected to the cover top wall, the cover top wall, the cover side wall, and the wall portion enclose the valve cavity, the first exhaust hole is the air inlet of the valve cavity, and the valve cover is provided with the air outlet of the valve cavity.

14. The battery cell according to claim 13, **characterized in that**
a side of the wall portion facing the outside of the housing is provided with a second sinking groove recessed relative to an outer surface of the wall portion; the valve cover further comprises a flanged wall; the cover side wall connects the cover top wall and the flanged wall; the flanged wall extends relative to the cover side wall toward a side away from the valve cavity; and at least part of the flanged wall is accommodated in the second sinking groove and connected to the wall portion.

15. The battery cell according to any one of claims 1 to 14, **characterized in that** the valve core comprises:
an elastic member, arranged in the valve cavity; and
a blocking member, movably arranged in the valve cavity, wherein the blocking member is used to seal the air inlet under the action of the elastic member and is also used to open the air inlet under the action of gas inside the housing.

16. The battery cell according to claim 15, **characterized in that**
the valve body comprises a valve cover, a first guide post protrudes from a side of the valve cover facing the blocking member, and part of the elastic member sleeves an outer side of the first guide post.

17. The battery cell according to claim 16, **characterized in that**
a diameter of the first guide post is D1, and an inner diameter of the elastic member is D2, satisfying 0 mm < D2 - D1 ≤ 5 mm.

18. The battery cell according to claim 16 or 17, **characterized in that**
a second guide post protrudes from a side of the blocking member facing the valve cover, and part of the elastic member sleeves an outer side of the second guide post.

19. The battery cell according to claim 18, **characterized in that**
a diameter of the second guide post is D3, and an inner diameter of the elastic member is D2, satisfying 0 mm < D3 - D1 ≤ 5 mm.

20. The battery cell according to claim 18 or 19, **characterized in that**
in an axial direction of the elastic member, there is a spacing between an end surface of a side of the first guide post away from the valve cover and an end surface of a side of the second guide post close to the valve cover; and
optionally, a height H1 of the spacing satisfies 0 mm < H1 ≤ 0.5 mm.

21. The battery cell according to any one of claims 15 to 20, **characterized in that**
in an axial direction of the valve cavity, two ends of the elastic member respectively abut against the valve cover and the blocking member, a distance between a first abutting surface of the valve cover and a second abutting surface of the blocking member is L1, and an entity length of the elastic member is L2, wherein L1 > L2; wherein the entity length of the elastic member is a length occupied by an entity of the elastic member after the elastic member is completely compressed; and
optionally, L1 - L2 > 0.5 mm.

22. The battery cell according to claim 21, **characterized in that**
the elastic member is a spring, and the entity length L2 of the elastic member is equal to d1*n1 + d2 + d3, wherein d1 is a wire diameter of the spring, n1 is a maximum number of turns of the spring in an axial direction, d2 is a thickness of an outermost portion of one end of the spring, d3 is a thickness of an outermost portion of the other end of the spring, d2 ≤ d1, and d3 ≤ d1.

23. The battery cell according to any one of claims 15 to 22, **characterized in that**
the elastic member is a spring, and a material of the elastic member comprises steel, iron, or aluminum.

24. The battery cell according to any one of claims 15 to 23, **characterized in that**
a plurality of limiting protrusions protrude from an outer circumferential surface of the blocking member, and the plurality of limiting protrusions are spaced apart along a circumferential direction of the blocking member.

25. The battery cell according to any one of claims 15 to 24, **characterized in that**
the blocking member comprises a pressing portion and a sealing portion, wherein two ends of the elastic member respectively abut against the valve cover and the pressing portion, the sealing portion is connected to a side of the pressing portion facing away from the valve cover, and the sealing portion is used to seal the air inlet.

26. The battery cell according to any one of claims 15 to 25, **characterized in that**
a material of the sealing portion comprises ethylene propylene diene monomer, fluororubber, or Teflon.

27. The battery cell according to any one of claims 1 to 26, **characterized in that**
the valve cover comprises a cover side wall, wherein the cover side wall has a second through hole extending through the cover side wall, the air outlet is the second through hole, and along an axial direction of the valve cavity, a sealing interface between the valve core and the valve seat is higher than or flush with a bottom wall of the second through hole.

28. The battery cell according to any one of claims 1 to 12 and 15 to 27, **characterized in that**
at least part of the one-way valve is accommodated in the first exhaust hole.

29. The battery cell according to claim 28, **characterized in that**
the first exhaust hole comprises a through hole section and a first hole section, wherein the through hole section and the first hole section are arranged along a thickness direction of the wall portion, the first hole section is located on a side of the through hole section facing away from the inside of the housing, an aperture of the first hole section is greater than an aperture of the through hole section, and at least part of the one-way valve is accommodated in the first hole section.

30. The battery cell according to claim 29, **characterized in that**
the first hole section comprises a circumferentially arranged hole side surface, wherein and an outer circumferential surface of the valve cover/valve seat of the one-way valve is welded to the hole side surface.

31. The battery cell according to claim 29 or 30, **characterized in that**
a side of the valve seat facing the valve cover is provided with a first step surface and a second step surface, wherein the first step surface is closer to the valve cover than the second step surface, and an outer circumferential surface of the second step is welded to the hole side surface.

32. The battery cell according to claim 30 or 31, **characterized in that**
the hole side surface fits with the outer circumferential surface of the valve cover/valve seat of the one-way valve, and both the hole side wall surface and the outer circumferential surface of the valve cover/valve seat of the one-way valve are arranged at an acute angle with a central axis of the first exhaust hole.

33. The battery cell according to any one of claims 30 to 32, **characterized in that**
a stress relief groove is provided around a weld mark between the valve cover/valve seat and the wall portion;
optionally, a first stress relief groove is provided on a side surface of the valve seat/valve cover facing the outside of the housing; and/or
a second stress relief groove is provided on a side surface of the wall portion facing the outside of the housing.

34. The battery cell according to any one of claims 1 to 33, **characterized in that**
the valve body is provided with a weak-strength zone.

35. The battery cell according to claim 34, **characterized in that**
the weak-strength zone comprises a small-thickness zone.

36. The battery cell according to claim 35, **characterized in that**
the valve body comprises a valve cover, wherein the valve cover comprises a cover top wall and a cover side wall connected to the cover top wall, and the small-thickness zone comprises a groove provided on the cover side wall.

37. The battery cell according to claim 36, **characterized in that**
the cover side wall has second through holes extending through the cover side wall, and the groove is provided on a connecting arm between adjacent two of the second through holes.

38. The battery cell according to claim 36 or 37, **characterized in that**
the groove is located on a side of the cover side wall facing the valve cavity; or
the groove is located on a side of the cover side wall away from the valve cavity.

39. The battery cell according to any one of claims 36 to 38, **characterized in that**
the small-thickness zone comprises a first score groove, wherein the first score groove is a circumferential groove on the cover side wall.

40. The battery cell according to any one of claims 36 to 38, **characterized in that**
the small-thickness zone comprises a plurality of second score grooves, wherein the plurality of second score grooves are spaced apart in a circumferential direction of the cover side wall.

41. The battery cell according to any one of claims 1 to 40, **characterized in that** the battery cell further comprises:
an insulating member, arranged on a side of the wall portion facing the inside of the housing, wherein the insulating member is provided with a second exhaust hole extending through the insulating member, and the second exhaust hole is in communication with the first exhaust hole on the wall portion.

42. The battery cell according to any one of claims 1 to 41, **characterized in that**
the first exhaust hole is an electrolyte injection hole of the battery cell; or
the first exhaust hole is spaced from the electrolyte injection hole of the battery cell.

43. The battery cell according to any one of claims 1 to 42, **characterized in that** the housing comprises:
a shell, internally provided with an accommodating cavity having an opening, wherein the accommodating cavity is used to accommodate an electrode assembly; and
an end cover closing the opening;
wherein the end cover is the wall portion; or
the shell comprises the wall portion; or
the wall portion is a wall located at a top of the housing when the battery cell is in a placed state.

44. The battery cell according to any one of claims 1 to 43, **characterized in that** the battery cell further comprises:
a pressure relief mechanism, arranged on the housing, wherein the pressure relief mechanism is configured to actuate and relieve an internal pressure of the battery cell upon thermal runaway of the battery cell, and an actuation pressure of the pressure relief mechanism is greater than an opening pressure of the one-way valve.

45. The battery cell according to claim 44, **characterized in that**
the wall portion has a pressure relief hole, wherein the pressure relief hole enables communication between the inside of the housing with the outside of the housing, the pressure relief mechanism is arranged at the pressure relief hole, and an aperture of the pressure relief hole is greater than an aperture of the first exhaust hole.

46. The battery cell according to claim 44 or 45, **characterized in that**
an exhaust rate of the one-way valve is less than an exhaust rate of the pressure relief mechanism.

47. The battery cell according to any one of claims 1 to 46, **characterized in that**
an opening pressure of the one-way valve is greater than or equal to 0.2 MPa, optionally greater than or equal to 0.4 MPa.

48. The battery cell according to any one of claims 44 to 47, **characterized in that**
the valve body is provided with a weak-strength zone, wherein the actuation pressure of the pressure relief mechanism is greater than an actuation pressure of the weak-strength zone, and the actuation pressure of the weak-strength zone is greater than the opening pressure of the one-way valve.

49. The battery cell according to any one of claims 1 to 48, **characterized in that**
an aperture of the air inlet is greater than or equal to an aperture of the first exhaust hole.

50. A battery, **characterized by** comprising the battery cell according to any one of claims 1 to 49.

51. An electric device, **characterized by** comprising the battery cell according to any one of claims 1 to 49, wherein the battery cell is used to provide electrical energy.
